(19) Europäisches Patentamt
European Patent Office
Office européen des brevets

(11) **EP 3 557 144 A1**

(12) **EUROPÄISCHE PATENTANMELDUNG**

(43) Veröffentlichungstag:
**23.10.2019 Patentblatt 2019/43**

(51) Int Cl.:
*F24D 13/02* (2006.01)     *F24D 19/10* (2006.01)
*H05B 3/14* (2006.01)     *H05B 3/26* (2006.01)
*C09D 5/24* (2006.01)     *H01B 1/24* (2006.01)

(21) Anmeldenummer: **18168472.1**

(22) Anmeldetag: **20.04.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Future Carbon GmbH
95448 Bayreuth (DE)**

(72) Erfinder:
• **JEHNES, Simon
95448 Bayreuth (DE)**
• **TROLL, Carola
95448 Bayreuth (DE)**
• **KREMER, Max
95448 Bayreuth (DE)**

• **SCHÜTZ, Michael
95448 Bayreuth (DE)**
• **SCHÜTZ, Walter
95448 Bayreuth (DE)**
• **FORERO, Stefan
95448 Bayreuth (DE)**
• **GIECKO, Christof
95448 Bayreuth (DE)**
• **NERLICH, Josef
95448 Bayreuth (DE)**
• **HABERKORN, Melanie
95448 Bayreuth (DE)**

(74) Vertreter: **Müller, Christian Stefan Gerd
ZSP Patentanwälte PartG mbB
Hansastraße 32
80686 München (DE)**

(54) **MEHRSCHICHTIGES VERBUNDSYSTEM AUFWEISEND EINE BEHEIZBARE SCHICHT UND KIT ZUM HERSTELLEN DES MEHRSCHICHTIGEN VERBUNDSYSTEMS**

(57)     Die vorliegende Erfindung betrifft ein mehrschichtiges Verbundsystem, ein Verfahren zu dessen Herstellung, ein Trockenbauelement enthaltend das mehrschichtige Verbundsystem, eine Wand und/oder Decke enthaltend das mehrschichtige Verbundsystem oder das Trockenbauelement. Des Weiteren betrifft die Erfindung ein Kit zum Herstellen des Trockenbauelementes und ein Kit zur Herstellung des mehrschichtigen Verbundsystems. Die Erfindung betrifft ferner die Verwendung der erfindungsgemäßen Gegenstände oder der durch die erfindungsgemäßen Kits herstellbaren Gegenstände zum Beheizen eines Raumes oder zum Abschirmen eines Raumes vor elektromagnetischer Strahlung, sowie entsprechende Verfahren.

Figur 1

## Beschreibung

### Gebiet der Erfindung

Die vorliegende Erfindung betrifft ein beheizbares, mehrschichtiges Verbundsystem, das insbesondere für Trockenbau geeignet ist, soweit ein Verfahren zu dessen Herstellung, ein Trockenbauelement enthaltend das erfindungsgemäße mehrschichtige Verbundsystem, eine Wand und/oder Decke enthaltend diese Gegenstände sowie ein Kit zum Herstellen des beheizbaren, mehrschichtigen Verbundsystems. Ferner betrifft die vorliegende Erfindung ein Kit zum Herstellen eines Trockenbauelementes, umfassend das beheizbare, mehrschichtige Verbundsystem sowie die Verwendung der erfindungsgemäßen Gegenstände und entsprechende Verfahren.

### Hintergrund

Die Beheizung der Oberfläche eines Objektes oder Körpers ist in vielen Lebenslagen erforderlich, wobei bei der Beheizung von Räumen vielerorts elektrische Wandheizvorrichtungen, die beispielsweise mäanderförmige Heizdrähte aufweisen, oder wassergestützte Wandheizvorrichtungen, in denen erwärmtes Wasser zirkuliert, eingesetzt werden können. Gemein ist diesen Heizvorrichtungen, dass sie Wandoberflächen auf eine gewünschte Temperatur erwärmen, wobei, da diese erwärmten Wände mit den übrigen mobilen und immobilen Gegenständen des Raumes (wie Möbel, Luft, Decke, Fußboden und Wände, an denen keine Wandheizvorrichtung befestigt ist) im Temperaturaustausch stehen, diese übrigen mobilen und immobilen Gegenstände des Raumes schlussendlich die gleiche Temperatur wie die erwärmten Wände aufweisen.

Auch ist die Verwendung einer leitfähigen Beschichtung, üblicherweise enthaltend ein oder mehrere leitfähige Zusatzstoffe, zur Anbringung auf der Baustelle (also "vor Ort"), grundsätzlich bekannt. Eine direkte Auftragung derartiger Beschichtungen auf einer Wand und/oder einer Decke "vor Ort" kann grundsätzlich den Vorteil haben, dass eine individuelle Anpassung an die räumlichen Gegebenheiten möglich ist. Jedoch hat dies den Nachteil, dass mehrere Arbeitsschritte und Trocknungsschritte vor Ort notwendig sind und somit die Bauzeit verlängert wird. Unter Umständen ist zudem eine fachgerechte Anbringung vor Ort nicht immer gewährleistet, so dass die tatsächlich erreichte Heizleistung wesentlich geringer ausfällt als die bei fachgerechtem Anbringen erreichbare.

### Zusammenfassung der Erfindung

Aufgabe der vorliegenden Erfindung ist somit, ein mehrschichtiges Verbundsystem bereitzustellen, welches einfach montiert werden kann und welches eine zuverlässige Beheizung ermöglicht. Insbesondere sollte das mehrschichte Verbundsystem konventionelle Baustoffplatten ersetzen können, ohne dass die entsprechenden Aufbauten an das erfindungsgemäße mehrschichtige Verbundsystem angepasst werden müssen.

Diese Aufgabe wird erfindungsgemäß durch die in den Patentansprüchen beschriebenen Gegenstände gelöst. Insbesondere haben die Erfinder der vorliegenden Erfindung überraschenderweise herausgefunden, dass durch die Beschichtung der Vorderseite der Baustoffplatte mit der beheizbaren Schicht in mehreren, voneinander räumlich getrennten Bereichen die einfache Montage auch in bestehenden Aufbauten ermöglicht wird.

Insbesondere betrifft die Erfindung in einem ersten Aspekt ein mehrschichtiges Verbundsystem, aufweisend eine Baustoffplatte und eine beheizbare Schicht, wobei die Vorderseite der Baustoffplatte der beheizbaren Schicht zugewandt ist und die beheizbare Schicht aus mehreren, voneinander räumlich getrennten Bereichen besteht.

In einem zweiten Aspekt wird erfindungsgemäß ein Verfahren zur Herstellung des mehrschichtigen Verbundsystems gemäß der vorliegenden Erfindung bereitgestellt, umfassend die Schritte a) Bereitstellen einer Baustoffplatte wie in der vorliegenden Erfindung definiert und b) Auftragen einer Heizfarbe, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, auf die Vorderseite der Baustoffplatte

In einem dritten Aspekt wird erfindungsgemäß ein Trockenbauelement, aufweisend das mehrschichtige Verbundsystem gemäß der vorliegenden Erfindung, bereitgestellt.

In einem vierten Aspekt wird eine Wand und/oder eine Decke, enthaltend das mehrschichtige Verbundsystem gemäß der vorliegenden Erfindung oder das Trockenbauelement gemäß der vorliegenden Erfindung, bereitgestellt.

In einem fünften Aspekt wird ein Kit zum Herstellen des erfindungsgemäßen Trockenbauelementes bereitgestellt, wobei das Kit (1) mindestens ein erfindungsgemäßes mehrschichtiges Verbundsystem, (2) ein Steuerungselement, das eine Spannungsquelle, vorzugsweise eine Spannungsquelle für Schutzkleinspannung, und eine Steuerungsvorrichtung zum Steuern der beheizbaren Schicht umfasst und (3) zwei elektrische Leitungen, wobei die erste elektrische Leitung mit einem der Pole der Spannungsquelle verbindbar oder verbunden ist und die zweite elektrische Leitung mit dem anderen Pol der Spannungsquelle verbindbar oder verbunden ist und die erste elektrische Leitung mit einem der mindestens zwei elektrisch leitfähigen Kontaktelementen elektrisch leitend verbindbar ist und die zweite elektrische Leitung mit einem der anderen der mindestens zwei elektrisch leitfähigen Kontaktelementen elektrisch leitend verbindbar ist, umfasst.

In einem sechsten Aspekt wird ein Kit zur Herstellung des erfindungsgemäßen mehrschichtigen Verbundsystems, das für Trockenbau geeignet ist, bereitgestellt, wobei das Kit (1) eine Baustoffplatte, vorzugsweise Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Thermovlies, Innendämmplatte, Klimaplatte oder Acrylglas, (2) eine Heizfarbe, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, wobei mehr bevorzugt die Heizfarbe mindestens zwei Leitfähigkeitsadditive, ausgewählt aus Leitfähigkeitsadditiven, die Graphit, Graphen und Ruß umfassen, umfasst und die Heizfarbe frei von elektrisch leitfähigen Carbonfasern und Kohlenstoff-Nanotubes ist, und das Kit ferner (3) mindestens zwei elektrisch leitfähige Kontaktelemente, umfasst.

In einem siebten Aspekt wird erfindungsgemäß die Verwendung des erfindungsgemäßen mehrschichtigen Verbundsystems oder des erfindungsgemäßen Trockenbauelementes oder eines mittels des Kits gemäß dem fünften Aspekt der vorliegenden Erfindung hergestellten Trockenbauelements oder eines mittels des Kits gemäß dem sechsten Aspekt der vorliegenden Erfindung hergestellten Verbundsystems zum Beheizen eines Raumes oder zum Abschirmen eines Raumes vor elektromagnetischer Strahlung bereitgestellt.

In einem achten Aspekt wird erfindungsgemäß ein Verfahren zum Beheizen eines Raumes bereitgestellt, umfassend die Schritte (i) Anbringen eines oder mehrerer mehrschichtiger Verbundsysteme gemäß der vorliegenden Erfindung an eine oder mehrere Wände und/oder Decken, und (ii) Beaufschlagen der beheizbaren Schicht des/der mehrschichtigen Verbundsystems/Verbundsysteme mit elektrischer Spannung und/oder elektrischem Strom.

*Mehrschichtiges Verbundsystem*

Baustoffplatte

Eine in dem erfindungsgemäßen, mehrschichtigen Verbundsystem enthaltene Komponente ist die Baustoffplatte. Prinzipiell ist für das erfindungsgemäße, mehrschichtige Verbundsystem jegliche für den Baubereich geeignete Baustoffplatte einsetzbar, sofern eine Beschichtung mit der beheizbaren Schicht, ggf. mittels ein oder mehrerer Zwischenschichten, möglich ist. Die Baustoffplatte kann flexibel sein, ist jedoch vorzugsweise nicht flexibel.

Vorzugsweise ist die Baustoffplatte ausgewählt aus einer Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Thermovlies, Innendämmplatte, Klimaplatte oder Acrylglas und/oder die Baustoffplatte ist brandhemmend ausgestattet. Insbesondere bevorzugt ist die Baustoffplatte ausgewählt aus einer Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Innendämmplatte, Klimaplatte oder Acrylglas. Wenn die Baustoffplatte aus einer Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Thermovlies, Innendämmplatte, Klimaplatte oder Acrylglas, vorzugsweise aus einer Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Innendämmplatte, Klimaplatte oder Acrylglas, ausgewählt ist, ist das mehrschichtige Verbundsystem der vorliegenden Erfindung insbesondere geeignet für Trockenbau. Insbesondere bevorzugt ist das mehrschichtige Verbundsystem brandhemmend ausgestattet. Als Vorderseite der Baustoffplatte wird in der vorliegenden Erfindung die Seite der Baustoffplatte angesehen, die durch die Länge und Breite der Baustoffplatte aufgespannt wird, und der beheizbaren Schicht zugewandt ist. Eine Baustoffplatte kann eine Seite, die durch die Länge und Breite der Baustoffplatte aufgespannt wird, aufweisen, die bei der Montage der Baustoffplatte an der entsprechenden Konstruktion, z.B. Wand oder Decke, von dieser Konstruktion abgewandt ist, beispielsweise eine einseitig mit Polystyrol beschichtete Gipsfaserplatte. In diesem Fall ist die Vorderseite der Baustoffplatte üblicherweise die Seite der Baustoffplatte, die durch die Länge und Breite der Baustoffplatte aufgespannt wird, und die bei der Montage der Baustoffplatte an der entsprechenden Konstruktion, z.B. Wand oder Decke, von dieser Konstruktion abgewandt ist. Bei Montage in Innenräumen ist die Vorderseite der Baustoffplatte üblicherweise die Seite der Baustoffplatte, die bei Montage der Baustoffplatte der Rauminnenseite zugewandt ist, sofern die Baustoffplatte nicht beidseitig montiert werden kann. Die Vorderseite der Baustoffplatte wird in der vorliegenden Erfindung auch als Vorderseite des mehrschichtigen Verbundsystems angesehen.

Die Ausmaße und Form der Baustoffplatte können herkömmlich sein. In Draufsicht (d.h. in Blickrichtung des Lotes auf die Fläche, die von der Länge und Breite der Baustoffplatte aufgespannt wird) kann die Baustoffplatte jede beliebige zweidimensionale Form aufweisen, z.B. rechteckig, quadratisch, kreisförmig, ellipsoid, in Form eine Parallelogramms, etc. Gemäß einer bevorzugten Ausführungsform weist die Baustoffplatte in Draufsicht eine viereckige Form, insbesondere die Form eines Rechtecks oder Parallelogramms, auf, vorzugsweise weist die Baustoffplatte die Form eines Rechtecks

auf. Vorzugsweise ist das Breiten-zu-Längen-Verhältnis der Baustoffplatte kleiner gleich 1. Bei dieser Ausführungsform weist die Baustoffplatte somit eine Band- oder Streifenform auf.

Vorzugsweise liegen die Länge (L), Breite (B) und Dicke (D) der Baustoffplatte in den nachstehenden Bereichen: L: 10 bis 500 cm (wie 50 bis 400 cm, 80 bis 350 cm, 100 bis 300 cm oder 120 bis 250 cm); B: 10 bis 250 cm (wie 20 bis 200 cm, 30 bis 180 cm, 40 bis 160 cm, 50 bis 140 cm oder 60 bis 130 cm); D: 1,0 bis 120 mm (wie 2,0 bis 100 mm oder 5,0 bis 80 mm). Die Ausmaße, insbesondere die Dicke der Baustoffplatte können je nach Material der Baustoffplatte variieren. Beispielsweise weist Acrylglas üblicherweise eine geringe Dicke auf, wohingegen Gipsfaserplatten etc. höhere Dicken als Acrylglas aufweisen.

Insbesondere bevorzugt erfüllen Länge (L) mal Breite (B) der Baustoffplatte die folgende Bedingung:

$$(50\,\text{cm} \cdot x \pm 10\,\text{cm}) \cdot (62{,}5\,\text{cm} \cdot y \pm 10\,\text{cm}),$$

vorzugsweise

$$(50\,\text{cm} \cdot x \pm 5\,\text{cm}) \cdot (62{,}5\,\text{cm} \cdot y \pm 5\,\text{cm})$$

mehr bevorzugt

$$(50\,\text{cm} \cdot x) \cdot (62{,}5\,\text{cm} \cdot y)$$

wobei

x     eine ganze Zahl im Bereich von 1 bis 10 ist, vorzugsweise eine ganze Zahl im Bereich von 2 bis 8 ist, mehr bevorzugt eine ganze Zahl im Bereich von 2 bis 6 ist, noch mehr bevorzugt eine ganze Zahl im Bereich von 2 bis 4 ist und insbesondere 4 ist und

y     eine ganze Zahl im Bereich von 1 bis 4 ist, vorzugsweise eine ganze Zahl im Bereich von 1 bis 3 ist, mehr bevorzugt 1 oder 2 ist und insbesondere 2 ist.

In der vorliegenden Erfindung ist eine Schutzkleinspannung eine Wechsel- oder Gleichspannung, insbesondere eine Wechsel- oder Gleichspannung im Bereich von 5 V bis 48 V, (wie im Bereich von 18 bis 24 V, beispielsweise 22 V).

Beheizbare Schicht

Eine weitere in dem erfindungsgemäßen, mehrschichtigen Verbundsystem enthaltene Komponente ist die beheizbare Schicht. Prinzipiell kann hier jede Schicht verwendet werden, die in der Lage ist, IR-Strahlung zu erzeugen, durch die ein Raum beheizt wird. Üblicherweise wird eine beheizbare Schicht verwendet, die mindestens ein auf Kohlenstoff basierendes Leitfähigkeitsadditiv enthält, insbesondere eine beheizbare Schicht, die mit einer Schutzkleinspannung betreibbar ist.

In der bevorzugten Ausführungsform, in der die beheizbare Schicht mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, ist die beheizbare Schicht aufgrund des Vorhandenseins des einen oder der mehreren Leitfähigkeitsadditive niederohmig, was zu einer guten elektrischen Leitfähigkeit führt, da nur ein geringer elektrischer Widerstand vorhanden ist. Dadurch kann eine homogene Beheizbarkeit realisiert werden. Durch die Niederohmigkeit ist zudem gewährleistet, dass an die beheizbare Schicht nur geringe Spannungen und/oder geringe Ströme angelegt werden müssen, um eine gute Beheizung zu erreichen.

Die beheizbare Schicht ist auf dem Substrat in an sich bekannter Weise aufgebracht, beispielsweise als, insbesondere folienartige, Beschichtung im Fall einer beheizbaren Schicht, die mindestens ein auf Kohlenstoff basierendes Leitfähigkeitsadditiv umfasst.

Die beheizbare Schicht ist vorzugsweise nur auf der Vorderseite der Baustoffplatte aufgebracht, ggf. mittels ein oder mehrerer Zwischenschichten.

Die beheizbare Schicht kann auf die Baustoffplatte in an sich bekannter Weise aufgebracht werden. Z.B. kann eine Dispersion, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, durch Rollen, Sprühen, Streichen, Pinseln, Rakeln, Spachteln oder Drucken, z.B. Siebdruck auf die Baustoffplatte aufgetragen werden, wobei Sprühen, Rollen, Rakeln oder Drucken, z.B. Siebdruck bevorzugt ist. Der Auftrag der Dispersion kann in einem Schritt (d.h. in nur einem Anstrich) oder in zwei oder mehreren Schritten (d.h. in 2 oder mehreren Anstrichen) erfolgen, wobei im letzteren Fall zwischen den einzelnen Auftragungen jeweils ein Trocknungsschritt liegen sollte. Vorzugsweise ist die beheizbare Schicht mittels Druck, insbesondere Siebdruck, in einem Anstrich erzeugbar. Gegebenenfalls kann vor dem Auftragen der beheizbaren Schicht eine Grundierschicht auf der Baustoffplatte erzeugt werden. Dies ist insbesondere vorteilhaft, um die Saugfähigkeit der Baustoffplatte zu verringern und/oder eine gleichbleibende Oberflächenqualität der Baustoffplatte sicherzustellen. Somit kann in einer Ausführungsform das mehrschichtige Verbundsystem zwischen der beheizbaren Schicht und der Baustoffplatte eine Grundierschicht aufweisen. Zudem können vor oder nach Auftragen der beheizbaren Schicht zwei oder mehr Kontakteelemente, wie weiter unten beschrieben, angebracht werden. Die Dispersion, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, wird in der vorliegenden Anmeldung auch als "Heizfarbe" bezeichnet.

Auf der beheizbaren Schicht können eine oder mehrere weitere Schichten (wie eine Ausgleichsschicht zum Ausgleich von Unebenheiten und/oder eine Schutzschicht (z.B. ein Schutzlack) und/oder eine Farbschicht) aufgebracht sein. Die Schutz- bzw. Ausgleichsschicht kann in einer Ausführungsform die beheizbare Schicht elektrisch isolieren. Die Schutz- bzw. Ausgleichsschicht kann in an sich bekannter Weise erzeugt werden. Beispiele für eine solche Schutz- bzw. Ausgleichsschicht sind eine Schicht aus Spachtelmasse oder Putz, eine Schicht aus Sperrgrund, ein Vliesband, das in einer Ausführungsform aufklebbar ist, oder eine Kombination davon. Vorteilhafterweise ist die Schutz- bzw. Ausgleichsschicht thermisch leitend, gegebenenfalls auch elektrisch isolierend. Weiterhin kann eine Farbschicht als oberste Schicht aufgetragen werden oder sein, die vorteilhafterweise thermisch leitend ist.

In einer Ausführungsform kann das mehrschichtige Verbundsystem gemäß der vorliegenden Erfindung eine EMV-Schicht aufweisen, die derart ausgestattet ist, elektromagnetische Strahlung zumindest teilweise zu absorbieren und/oder zu reflektieren. Diese Ausführungsform weist den Vorteil auf, dass elektromagnetische Strahlung, die durch die beheizbare Schicht erzeugt wird, zumindest teilweise absorbierbar ist oder absorbiert wird und/oder reflektierbar ist oder reflektiert wird. In dieser Ausführungsform befindet sich die EMV-Schicht üblicherweise auf der Seite der beheizbaren Schicht, die der Baustoffplatte zugewandt ist.

Die Gesamtfläche der beheizbaren Schicht macht vorzugsweise 10 bis 90%, mehr bevorzugt 20 bis 80%, noch mehr bevorzugt 30 bis 70%, noch mehr bevorzugt 40 bis 60% der Fläche der Vorderseite der Baustoffplatte aus. In einer bevorzugten Ausführungsform macht die Gesamtfläche der beheizbaren Schicht 45 bis 55% der Fläche der Vorderseite der Baustoffplatte aus.

Die beheizbare Schicht besteht aus mehreren, voneinander räumlich getrennten Bereichen. Insbesondere bevorzugt besteht die beheizbare Schicht des mehrschichtigen Verbundsystems aus mindestens 4, mehr bevorzugt aus 4 bis 12, noch mehr bevorzugt aus 6 bis 10, voneinander räumlich getrennten Bereichen.

"Räumlich getrennter Bereich" und grammatikalische Variationen hiervon bedeutet in der vorliegenden Erfindung, dass diese Bereiche, senkrecht auf die Vorderseite der Baustoffplatte gesehen, sich nicht berühren oder überlappen.

Üblicherweise beträgt der Abstand zweier voneinander räumlich getrennter Bereiche der beheizbaren Schicht des erfindungsgemäßen mehrschichtigen Verbundsystems mindestens 1,0 cm, vorzugsweise mindestens 2,0 cm, mehr bevorzugt mindestens 5,0 cm und am meisten bevorzugt mindestens 10 cm.

Die voneinander räumlich getrennten Bereiche der beheizbaren Schicht, können jede Form aufweisen, die geeignet ist, um eine Beheizung der Schicht zu ermöglichen, z.B. rechteckig, quadratisch, kreisförmig, ellipsoid, in Form eine Parallelogramms, etc. Gemäß einer bevorzugten Ausführungsform weisen die voneinander räumlich getrennten Bereiche der beheizbaren Schicht, in Draufsicht eine viereckige Form, insbesondere die Form eines Rechtecks oder Parallelogramms, vorzugsweise die Form eines Rechtecks, auf. Vorzugsweise ist das Breiten-zu-Längen-Verhältnis der voneinander räumlich getrennten Bereiche der beheizbaren Schicht, kleiner gleich 1. Bei dieser Ausführungsform weisen die voneinander räumlich getrennten Bereiche der beheizbaren Schicht, somit eine Band- oder Streifenform auf.

Vorzugsweise weist jeder der voneinander räumlich getrennten Bereiche der beheizbaren Schicht die Form eines Rechtecks oder Parallelogramms auf und insbesondere eine Fläche von 0,01 bis 1,00 m$^2$, vorzugsweise 0,05 bis 0,50 m$^2$, mehr bevorzugt 0,05 bis 0,25 m$^2$ und noch mehr bevorzugt 0,10 bis 0,20 m$^2$ auf.

Falls jeder der voneinander räumlich getrennten Bereiche der beheizbaren Schicht die Form eines Rechtecks oder Parallelogramms aufweist, betragen die Kantenlängen vorzugsweise 5 bis 180 cm, mehr bevorzugt 10 bis 150 cm, noch mehr bevorzugt 15 bis 100 cm und noch mehr bevorzugt 20 bis 60 cm.

Falls jeder der voneinander räumlich getrennten Bereiche der beheizbaren Schicht die Form eines Rechtecks oder Parallelogramms aufweist, beträgt das Verhältnis von kürzerer zu längerer Kante vorzugsweise weniger als 1,0, mehr bevorzugt zwischen 0,25 und 0,85, noch mehr bevorzugt zwischen 0,45 und 0,70.

Vorzugsweise sind die Flächen der einzelnen, voneinander räumlich getrennten Bereiche der beheizbaren Schicht ungefähr gleich groß, insbesondere bevorzugt erfüllen die Flächen der einzelnen, voneinander räumlich getrennten Bereiche der beheizbaren Schicht folgende Bedingung:

$$F(A)/F(B) \leq 1,30,$$

vorzugsweise

$$F(A)/F(B) \leq 1,10,$$

mehr bevorzugt

$$F(A)/F(B) \leq 1,05,$$

wobei

F(A)    die Fläche des größten der voneinander räumlich getrennten Bereiche der beheizbaren Schicht innerhalb des erfindungsgemäßen mehrschichtigen Verbundsystems ist, und

F(B) die Fläche des kleinsten der voneinander räumlich getrennten Bereiche der beheizbaren Schicht innerhalb des erfindungsgemäßen mehrschichtigen Verbundsystems ist.

Die Ausmaße und Form des mehrschichtigen Verbundsystems werden im Wesentlichen durch die Ausmaße und Form der Baustoffplatte und die Dicke der Beschichtung(en), z.B. die beheizbare Schicht, bestimmt. In Draufsicht (d.h. in Blickrichtung des Lotes auf die Fläche, die von der Länge und Breite des mehrschichtigen Verbundsystems aufgespannt wird) kann das mehrschichtige Verbundsystem jede beliebige zweidimensionale Form aufweisen, z.B. rechteckig, quadratisch, kreisförmig, ellipsoid, in Form eine Parallelogramms, etc. Gemäß einer bevorzugten Ausführungsform weist das mehrschichtige Verbundsystem in Draufsicht eine viereckige Form, insbesondere die Form eines Rechtecks oder Parallelogramms, auf, vorzugsweise weist das mehrschichtige Verbundsystem die Form eines Rechtecks auf. Vorzugsweise ist das Breiten-zu-Längen-Verhältnis des mehrschichtigen Verbundsystems kleiner gleich 1. Bei dieser Ausführungsform weist das mehrschichtige Verbundsystem somit eine Band- oder Streifenform auf.

Vorzugsweise liegen die Länge (L), Breite (B) und Dicke (D) des mehrschichtigen Verbundsystems in den nachstehenden Bereichen: L: 10 bis 500 cm (wie 50 bis 400 cm, 80 bis 350 cm, 100 bis 300 cm oder 120 bis 250 cm); B: 10 bis 250 cm (wie 20 bis 200 cm, 30 bis 180 cm, 40 bis 160 cm, 50 bis 140 cm oder 60 bis 130 cm); D: 1,0 bis 125 mm (wie 2,0 bis 105 mm oder 5,0 bis 85 mm). Die Ausmaße, insbesondere die Dicke des mehrschichtigen Verbundsystems können je nach Material der Baustoffplatte variieren. Beispielsweise weist Acrylglas üblicherweise eine geringe Dicke auf wohingegen Gipsfaserplatten etc. höhere Dicken als Acrylglas aufweisen.

Insbesondere bevorzugt erfüllen Länge (L) mal Breite (B) des mehrschichtigen Verbundsystems die folgende Bedingung:

$$(50\,\text{cm} \cdot \text{x} \pm 10\,\text{cm}) \cdot (62{,}5\,\text{cm} \cdot \text{y} \pm 10\,\text{cm}),$$

vorzugsweise

$$(50\,\text{cm} \cdot \text{x} \pm 5\,\text{cm}) \cdot (62{,}5\,\text{cm} \cdot \text{y} \pm 5\,\text{cm})$$

mehr bevorzugt

$$(50\,\text{cm} \cdot \text{x}) \cdot (62{,}5\,\text{cm} \cdot \text{y})$$

wobei

x eine ganze Zahl im Bereich von 1 bis 10 ist, vorzugsweise eine ganze Zahl im Bereich von 2 bis 8 ist, mehr bevorzugt eine ganze Zahl im Bereich von 2 bis 6 ist, noch mehr bevorzugt eine ganze Zahl im Bereich von 2 bis 4 ist und insbesondere 4 ist und

y eine ganze Zahl im Bereich von 1 bis 4 ist, vorzugsweise eine ganze Zahl im Bereich von 1 bis 3 ist, mehr bevorzugt 1 oder 2 ist und insbesondere 2 ist.

Vorzugsweise ist das mehrschichtige Verbundsystem senkrecht auf die Vorderseite des mehrschichtigen Verbundsystems gesehen in mindestens 2 Teile, vorzugsweise in mindestens 3 Teile, mehr bevorzugt in mindestens 4 Teile, trennbar, vorzugsweise entlang einer oder mehrerer gerader Linien, ohne dabei einen der voneinander räumlich getrennten Bereiche der beheizbaren Schicht zu durchtrennen, und wobei jedes der Teile des mehrschichtigen Verbundsystems nach der Trennung mindestens einen der voneinander räumlich getrennten Bereiche der beheizbaren Schicht aufweist.

Vorzugsweise ist das mehrschichtige Verbundsystem rechteckig, quadratisch oder in Form eines Parallelogramms ausgeführt und die mehreren, voneinander räumlich getrennten Bereiche der beheizbaren Schicht sind derart angeordnet, dass das mehrschichtige Verbundsystem mindestens parallel zu einer Kante des mehrschichtigen Verbundsystems trennbar ist, ohne dabei einen der voneinander räumlich getrennten Bereiche der beheizbaren Schicht zu durchtrennen, und wobei jedes der Teile des mehrschichtigen Verbundsystems mindestens einen der voneinander räumlich getrennten Bereiche der beheizbaren Schicht aufweist. Insbesondere ist es bevorzugt, wenn das mehrschichtige Verbundsystem rechteckig, quadratisch oder in Form eines Parallelogramms ausgeführt ist und die mehreren, voneinander räumlich getrennten Bereiche der beheizbaren Schicht derart angeordnet sind, dass das mehrschichtige Verbundsystem parallel zu zwei Kanten des mehrschichtigen Verbundsystems trennbar ist, wobei diese zwei Kanten nicht zueinander parallel sind, und wobei jedes der Teile des mehrschichtigen Verbundsystems nach der Trennung mindestens einen der voneinander räumlich getrennten Bereiche der beheizbaren Schicht aufweist.

Beispielsweise kann das mehrschichtige Verbundsystem rechteckig, quadratisch oder in Form eines Parallelogramms, vorzugsweise rechteckig, ausgeführt sein und die beheizbare Schicht besteht aus 4 voneinander räumlich getrennten Bereichen, die vorzugsweise als 2x2-Anordnung ausgeführt sind.

Alternativ kann das mehrschichtige Verbundsystem rechteckig, quadratisch oder in Form eines Parallelogramms, vorzugsweise rechteckig, ausgeführt sein und die beheizbare Schicht besteht aus 6 voneinander räumlich getrennten Bereichen, die vorzugsweise als 2x3-Anordnung ausgeführt sind.

In einer weiteren Alternative kann das mehrschichtige Verbundsystem rechteckig, quadratisch oder in Form eines Parallelogramms, vorzugsweise rechteckig, ausgeführt sein und die beheizbare Schicht besteht aus 8 voneinander räumlich getrennten Bereichen, die vorzugsweise als 4x2-Anordnung ausgeführt sind. Diese Alternative ist insbesondere bevorzugt.

Insbesondere bevorzugt ist es, wenn jedes der Teile des erfindungsgemäßen mehrschichtigen Verbundsystems nach der Trennung eine Fläche von 5 bis 60% (z.B. 40 bis 60%, wenn das erfindungsgemäße mehrschichtige Verbundsystem nach der Trennung aus 2 Teilen besteht; 20 bis 30%, wenn das erfindungsgemäße mehrschichtige Verbundsystem nach der Trennung aus 4 Teilen besteht; 12 bis 20%, wenn das erfindungsgemäße mehrschichtige Verbundsystem nach der Trennung aus 6 Teilen besteht; oder 10 bis 15%, wenn das erfindungsgemäße mehrschichtige Verbundsystem nach der Trennung aus 8 Teilen besteht), gemessen an der Gesamtfläche des mehrschichtigen Verbundsystems gemäß der vorliegenden Erfindung vor der Trennung, aufweist.

Insbesondere bevorzugt erfüllen Länge (L) mal Breite (B) jedes der Teile des erfindungsgemäßen mehrschichtigen Verbundsystems nach der Trennung die folgende Bedingung:

$$(50 \,\mathrm{cm} \cdot \mathrm{x} \pm 10 \,\mathrm{cm}) \cdot (62{,}5 \,\mathrm{cm} \cdot \mathrm{y} \pm 10 \,\mathrm{cm}),$$

vorzugsweise

$$(50 \,\mathrm{cm} \cdot \mathrm{x} \pm 5 \,\mathrm{cm}) \cdot (62{,}5 \,\mathrm{cm} \cdot \mathrm{y} \pm 5 \,\mathrm{cm})$$

mehr bevorzugt

$$(50 \,\mathrm{cm} \cdot \mathrm{x}) \cdot (62{,}5 \,\mathrm{cm} \cdot \mathrm{y})$$

wobei

x   eine ganze Zahl im Bereich von 1 bis 5 ist, vorzugsweise eine ganze Zahl im Bereich von 1 bis 3 ist, und

y   eine ganze Zahl im Bereich von 1 bis 4 ist, vorzugsweise eine ganze Zahl im Bereich von 1 bis 3 ist, mehr bevorzugt 1 oder 2 ist.

Insbesondere bevorzugt ist es, wenn die Gesamtfläche der räumlich getrennten Bereiche der beheizbaren Schicht auf jedem der Teile des erfindungsgemäßen mehrschichtigen Verbundsystems nach der Trennung eine Fläche von 5 bis 60% (z.B. 40 bis 60%, wenn die beheizbare Schicht des erfindungsgemäßen mehrschichtigen Verbundsystems aus 2 voneinander räumlich getrennten Bereichen besteht und das erfindungsgemäße mehrschichtige Verbundsystem nach der Trennung aus 2 Teilen besteht; 20 bis 30%, wenn die beheizbare Schicht des erfindungsgemäßen mehrschichtigen Verbundsystems aus 4 voneinander räumlich getrennten Bereichen besteht und das erfindungsgemäße mehrschichtige Verbundsystem nach der Trennung aus 4 Teilen besteht; 12 bis 20%, wenn die beheizbare Schicht des erfindungsgemäßen mehrschichtigen Verbundsystems aus 6 voneinander räumlich getrennten Bereichen besteht und das erfindungsgemäße mehrschichtige Verbundsystem nach der Trennung aus 6 Teilen besteht; oder 10 bis 15%, wenn die beheizbare Schicht des erfindungsgemäßen mehrschichtigen Verbundsystems aus 8 voneinander räumlich getrennten Bereichen besteht und das erfindungsgemäße mehrschichtige Verbundsystem nach der Trennung aus 8 Teilen besteht), gemessen an der Gesamtfläche der beheizbaren Schicht des mehrschichtigen Verbundsystems gemäß der vorliegenden Erfindung vor der Trennung, aufweist.

Die beheizbare Schicht gemäß der vorliegenden Erfindung umfasst vorzugsweise mindestens ein Leitfähigkeitsadditiv, ausgewählt aus Leitfälligkeitsadditiven, die Graphit, Graphen und Ruß umfassen, und mindestens ein Bindemittel, wobei das Bindemittel ein elektrisch nicht leitfähiges Polymer oder ein anorganisches Bindemittel umfasst, mehr bevorzugt umfasst die beheizbare Schicht mindestens zwei Leitfähigkeitsadditive, ausgewählt aus Leitfähigkeitsadditiven, die Graphit, Graphen und Ruß umfassen, und ferner ist die beheizbare Schicht frei von elektrisch leitfähigen Carbonfasern und Kohlenstoff-Nanotubes.

Leitfähigkeitsadditive sind elektrisch leitende Materialien und sind dem Fachmann bekannt. Spezifische Beispiele für auf Kohlenstoff basierende Leitfähigkeitsadditive beinhalten Graphit, Ruß, Graphen, Kohlenstoff-Nanotubes (CNTs), Carbonfasern und Kohlenstoff-Nanofasern.

Die Eigenschaften der vorstehend genannten Leitfähigkeitsadditive werden im Folgenden genauer erläutert.

Graphit ist ein sehr häufig vorkommendes Mineral und gehört zur Ordnung der Halbmetalle und Nichtmetalle. Er ist neben Diamant und Fullerenen die dritte unter irdischen Normalbedingungen stabile Form (Modifikation) des Kohlenstoffs und kristallisiert meist im hexagonalen, sehr selten auch im trigonalen Kristallsystem.

Graphit entwickelt undurchsichtige, graue bis schwarze Kristalle in sechseckiger, tafeliger, schuppiger oder stengeliger Form, die auf den Kristallflächen Metallglanz aufweisen.

Im kristallinen Graphit liegen parallel verlaufende ebene Schichten, die "Basalebenen" oder "Graphen-Schichten", vor. Eine Schicht besteht aus kovalent verknüpften Sechsecken, deren Kohlenstoffatome $sp^2$-hybridisiert sind. Innerhalb dieser Ebenen beträgt die Bindungsenergie zwischen den Kohlenstoffatomen 4,3 eV, zwischen ihnen dagegen lediglich 0,07 eV. Aus dieser extremen Richtungsabhängigkeit der Bindungskräfte resultiert eine deutliche Anisotropie der mechanischen, elektrischen und thermischen Eigenschaften des Graphits:

-   leichte Spaltbarkeit des reinen Graphits entlang der Basalebenen, deutlich höhere Festigkeit entlang der Kristallschichten;

- thermische und elektrische Isolation orthogonal zu den Basalebenen gegenüber einer fast metallischen Leitfähigkeit entlang der Ebenen.

Die Leitfähigkeit innerhalb einer Ebene wird durch die Delokalisation der $\pi$-Elektronen ermöglicht. Weisen die Ebenen keine feste Korrelation zueinander auf, spricht man von turbostratischem Kohlenstoff. Graphit kann auch synthetischen Ursprungs sein, als Produkt der Verkokung von dafür geeigneten Kunststoffen, Pech, Erdöl, Kohle und dergleichen.

Graphen besteht, wie oben bereits erwähnt, aus einer einzelnen Schicht, bestehend aus kovalent verknüpften Sechsecken von Kohlenstoffatomen, wobei diese Kohlenstoffatome $sp^2$-hybridisiert sind. Im Gegensatz zum Graphit liegt eine einzelne Schicht isoliert vor, besteht also nicht aus parallel verlaufenden Schichten. Graphen ist folglich eine Modifikation des Kohlenstoffs mit zweidimensionaler Struktur. Graphen ist in Schichtrichtung extrem steif, da die Bindung zwischen zwei benachbarten $sp^2$-hybridisierten Kohlenstoffatomen von der Stärke her mit der Bindung zwischen zwei $sp^3$-hybridisierten Kohlenstoffatomen innerhalb eines Diamantgitters vergleichbar ist. Graphen kann mittels einer Vielzahl von synthetischen Methoden hergestellt werden.

Ruß ist ein schwarzer, pulverformiger Feststoff, der je nach Qualität und Verwendung zu 80% oder mehr aus Kohlenstoff besteht.

Je nach ihrem Anwendungsgebiet besitzen Ruße spezielle Eigenschaftsprofile, die durch die Art des Herstellverfahrens und durch Variation der Prozessparameter gezielt beeinflusst werden.

Ruße, ihre Eigenschaften, Herstellungsverfahren, Verwendungen und so weiter sind bereits weitreichend beschrieben, so dass an dieser Stelle auf die einschlägige Fachliteratur verwiesen wird.

Kohlenstoff-Nanotubes (CNTs) bestehen aus zum Zylinder aufgerollten, geschlossen Graphen-Schichten. Einzelne Röhren nennt man "single wall carbon nanotubes" (SWCNT), Teilchen aus konzentrisch gestapelten Röhren aufsteigenden Durchmessers werden "multiwall carbon nanotubes" (MWCNT) genannt.

CNTs kann man über verschiedene Methoden herstellen. Am bekanntesten sind der Lichtbogenprozess, das Laserablationsverfahren und die katalytisch unterstützte Gasphasenabscheidung (CCVD). Letzteres Verfahren eignet sich zur großtechnischen Produktion von CNTs. Hierbei entstehen die CNT aus gasförmigen Kohlenstofflieferanten (Kohlenwasserstoffe, Alkohole, $CO$, $CO_2$) auf metallischen, katalytisch aktiven Substanzen.

Typischerweise weisen SWCNT einen Durchmesser von 0,5 - 4 nm, MWCNT einen Durchmesser zwischen 6 und 100 nm auf. Die Länge von CNTs kann bis zu einigen mm betragen.

Die physikalischen Eigenschaften von CNTs entsprechen weitestgehend jenen des Graphits entlang der Basalebenen.

CNTs werden heute als mechanische Verstärkung, elektrisch und thermisch leitfähiges Additiv in Polymeren, Keramiken und Metallen eingesetzt. Dazu werden die CNTs oft an ihrer Oberfläche chemisch modifiziert, um den Anforderungen einer guten Dispergierbarkeit und Anbindung an die Matrix zu genügen. In der Regel werden die CNTs dem Matrixmaterial zugegeben. Somit soll der Begriff "CNTs" sowohl unmodifizierte als auch modifizierte (insbesondere seitenwandmodifizierte) CNTs umfassen. Aufgrund des hohen Aspektverhältnisses und der hohen spezifischen Oberfläche der CNTs sind nur Komposite mit verhältnismäßig niedrigem CNT-Gehalt darstellbar.

Carbonfasern (auch Kohlenstofffasern genannt) sind industriell hergestellte Fasern. Man unterscheidet isotrope und anisotrope Typen, wobei isotrope Fasern nur geringe Festigkeiten aufweisen und sich anisotrope Fasern durch hohe Festigkeiten und Steifigkeiten bei gleichzeitig geringer Bruchdehnung in axialer Richtung auszeichnen. Der Durchmesser einer Carbonfaser beträgt etwa 5 bis 9 $\mu$m und ist somit größer als der von Kohlenstoff-Nanofasern oder CNTs.

Kohlenstoff-Nanofasern (CNF) bestehen aus Graphenschichten, die entlang der Filamentachse aufeinander gestapelt sind. Der Winkel (die Orientierung) der Graphenebenen bezüglich der Filamentachse wird zur groben Unterscheidung herangezogen. Sogenannte 'Herringbone' CNF besitzen demnach Graphenebenen die in einem Winkel $\neq 90°$ angeordnet sind. Diese CNF können massiv oder auch hohl sein. Ihre Durchmesser liegen im Bereich 50 nm - 1 $\mu$m und ihre Längen können bis zu mm betragen. Im Falle, dass die Graphenschichten in einen Winkel $= 90°$ zur Filamentachse angeordnet sind spricht man von 'Platelet' CNF. Ihre Durchmesser liegen im Bereich von 50 bis 500 nm und ihre Längen können bis zu 50 $\mu$m betragen.

Diese CNF werden in der Regel über CVD hergestellt. Ihre Anwendungen finden sich vornehmlich in der Katalyse als Katalysatorträger und als aktive Zusatzstoffe in Li-Ionen-Batterien oder bei der Gasspeicherung.

In der beheizbaren Schicht kann mindestens ein Bindemittel enthalten sein, vorzugsweise ist mindestens ein Bindemittel enthalten, wobei das Bindemittel vorzugsweise ein elektrisch nicht leitendes Polymer umfasst. Unter "Bindemittel" wird erfindungsgemäß eine Verbindung verstanden, durch die Partikel (z.B. Leitfähigkeitsadditive, wie beispielsweise Graphit, Graphen und/oder Ruß) auf einem Substrat, z.B. der Baustoffplatte des erfindungsgemäßen mehrschichtigen Verbundsystems oder evtl. vorhandener Zwischenschicht(en), derart aufbringbar sind, dass die Partikel zusammen mit dem Bindemittel (und gegebenenfalls mit weiteren Substanzen) auf einem Substrat, z.B. der Baustoffplatte des erfindungsgemäßen mehrschichtigen Verbundsystems oder evtl. vorhandener Zwischenschicht(en), haften. Das Bindemittel fördert also die Kohäsion der Partikel in der beheizbaren Schicht und die Adhäsion der beheizbaren Schicht an dem Substrat, z.B. der Baustoffplatte des erfindungsgemäßen mehrschichtigen Verbundsystems oder evtl. vorhandener Zwischenschicht(en). Bindemittel können organisch oder anorganisch ausgebildet sein. In ähnlicher Weise kann die Dispersion, die mindestens ein Leitfähigkeitsadditiv, ausgewählt aus Leitfähigkeitsadditiven, die Graphit, Graphen und Ruß umfassen, enthält und zur Erzeugung einer beheizbaren Schicht, die mindestens ein Leitfähigkeitsadditiv, ausgewählt aus Leitfähigkeitsadditiven, die Graphit, Graphen und Ruß umfassen, enthält, verwendbar ist, mindestens ein wie vorstehend definiertes Bindemittel enthalten.

Das nicht elektrisch leitfähige Polymer ist nicht besonders begrenzt und beinhaltet verschiedene Arten von Polymeren, insbesondere thermoplastische Polymere (auch Thermoplaste genannt), Elastomere und Reaktivharze, gegebenenfalls im Gemisch mit einem oder mehreren Zusatzstoffen (wie Härtern und Beschleunigern). Unter Polymeren versteht man chemische Verbindungen, die aus einer oder wenigen Sorten von gleichartigen Einheiten (Monomeren) aufgebaut sind. Solche Moleküle sind meist kettenartig oder verzweigt aufgebaut und weisen kovalente Bindungen zwischen den Monomeren auf. Nachfolgend werden einige, jedoch nicht ausschließliche Beispiele für bevorzugte Polymere beschrieben, die jeweils einzeln, oder aber in jeder beliebigen Kombination zum Einsatz kommen können. Der Anteil des nicht elektrisch leitfähigen Polymers in der beheizbaren Schicht kann 10 bis 95% (beispielsweise 20 bis 85%, 30 bis 80% oder 40 bis 75%) nach Gewicht betragen. Gleichfalls kann der Anteil des nicht elektrisch leitfähigen Polymers in der Dispersion, die mindestens ein Leitfähigkeitsadditiv, ausgewählt aus Leitfähigkeitsadditiven, die Graphit, Graphen und Ruß umfassen, und zur Erzeugung einer beheizbaren Schicht, die mindestens ein Leitfähigkeitsadditiv, ausgewählt aus Leitfähigkeitsadditiven, die Graphit, Graphen und Ruß umfassen, enthält, verwendbar ist, 10 bis 90% (beispielsweise 20 bis 80%, 30 bis 75% oder 40 bis 60%) nach Gewicht betragen.

Beispielhafte Gruppen von thermoplastischen Polymeren umfassen die folgenden:

- Polyolefine (wie Polypropylen, Polyethylen, Polybutylen, Polyisobutylen, etc.)
- Polyamide (wie z.B. Polyamid-66, Polyamid-12, Polyamid-11, Polyamid-6, etc.)
- Polyacryl-Polymere (wie Polymethylmethacrylat, Polyacrylnitril, Polyacrylsäure und Derivate, etc.)
- Fluorpolymere (wie Polytetraflourethylen, Polyvinylidenfluorid, etc.)
- aliphatische und aromatische Polyester (wie z.B. Polyglykole, Polyethylenterephthalat, etc.)
- Polyimide (wie z.B. Polyetherimid)
- Poly(aryl)etherketone (wie z.B. Polyetherketone, Polyetheretherketone, etc.)
- Polysulfide (wie z.B. Polyphenylensulfid, Polyphenylensulfon, Polysulfon, Polyethersulfon, etc.)
- Polyacetale
- Cellulose und Derivate davon (wie z.B. Cellulosenitrate, -acetate, -acetatbutyrate, etc.)
- Vinylpolymere (wie z.B. Polyvinylchlorid, Polyvinylacetat, Polyvinylalkohol, Polyvinylbutyral, Polyvinylpyrrolidon, etc.)

Beispielhafte Gruppen von Elastomeren umfassen die folgenden:

- Naturkautschuke, die Chlor-, Styrol-, Nitril-, Schwefel- oder Sauerstoffsubstituenten enthalten können
- Isoprenkautschuke, die Chlor-, Styrol-, Nitril-, Schwefel- oder Sauerstoffsubstituenten enthalten können
- Butadienkautschuke, die Chlor-, Styrol-, Nitril-, Schwefel- oder Sauerstoffsubstituenten enthalten können
- andere Kautschuke, die Chlor-, Styrol-, Nitril-, Schwefel- oder Sauerstoffsubstituenten enthalten können
- Silikonelastomere
- Polyurethane

Ein Beispiel für Reaktivharze ist ein Epoxydharz, das epoxygruppenhaltige Monomere, Oligomere und/oder Polymere enthält. Epoxydharze können auf aromatischen Monomeren (z.B. auf Bisphenol-A, -F, Novolak und andere), aliphatischen Monomeren oder cycloaliphatischen Monomeren basieren. Beispiele für die letztere Gruppe beinhalten in nicht begrenzender Weise 3,4-Epoxycyclohexylmethyl-3,4-epoxycyclohexancarboxylat, Bis((3,4-epoxy-cyclohexyl)methyl)adipat und andere Derivate höheren oder auch niedrigeren Molekulargewichts. Die Epoxydharze können mono-, di-, tri-, tetra- und mehrfunktionell sein und umfassen alle Molekulargewichte.

Weitere Gruppen für Reaktivharze stellen Cyanatester und Isocyanate dar und einzelne Vertreter hiervon umfassen in nicht begrenzender Weise 2,4-Diisocyanato-1-methyl-benzol, 1-Isocyanato-4-[(4-isocyanatophenyl)methyl]benzol, 1,1-Bis(4-cyanatophenyl)ethan, 2,2-Bis(4-cyanatophenyl)propan, Oligo(3-methylen-1,5-phenylencyanat) und andere Derivate höheren oder auch niedrigeren Molekulargewichts.

Eine weitere Gruppe für Reaktivharze ist die Gruppe von linearen und verzweigten Diolen und mehrfunktionellen Alkoholen, wie Oligo- und Polyester-Polyole und Polyether-Polyole.

Eine weitere Gruppe für Reaktivharze ist die Gruppe von reaktiven Polyimidsystemen. Reaktive Polyimidsysteme können monofunktionelle Monomere (wie z.B. N-Phenylmaleimid, 2,6-Xylylmaleimid, N-Cyclohexylmaleimid, etc.) und/oder difunktionelle Monomere (wie z.B. 4,4'-Diphenylmethanbismaleimid, N,N'-(4-Methyl-m-phenylen)bismaleimid, N,N'-m-Phenylenbismaleimid, Bisphenol-A Diallylether, o,o'-Diallylbisphenol-A, Polyphenylmethanbismaleimid, Polybenzimidazol, etc.) enthalten.

Eine weitere Gruppe für Reaktivharze ist die Gruppe von Phenolharzen. Beispiele umfassen in nicht begrenzender Weise diejenigen, die auf Novolak oder Resol basieren.

Weitere beispielhafte Gruppen für Reaktivharze umfassen die folgenden:

- ungesättigte Polyester- und Vinylesterharze
- Alkydharze
- Melaminharze
- Polysilane und Silikone
- Acrylate (einschließlich Methacrylate)
- Polychinoxaline
- Peche und Bitumen

Weiterhin können Härter und/oder Beschleuniger, wie Amine, Amide, Amidoamine, Aminoalkohole, Aminosäuren, Anhydride, Imidazole, Cyanamide, Alkohole, Phenole, Polyole, Cyanate, Mercaptane, Carbonsäuren, Metallkomplexe etc., in der beheizbaren Schicht (bzw. in der Dispersion die mindestens ein Leitfähigkeitsadditiv, ausgewählt aus Leitfähigkeitsadditiven, die Graphit, Graphen und Ruß umfassen, enthält, und die zur Erzeugung einer beheizbaren Schicht, die mindestens ein Leitfähigkeitsadditiv, ausgewählt aus Leitfähigkeitsadditiven, die Graphit, Graphen und Ruß umfassen, hält, verwendbar ist) enthalten sein. Unter "Härter" wird erfindungsgemäß eine Verbindung verstanden, durch die eine Vielzahl einzelner Grundbausteine (z.B. eines Bindemittels) zu einem dreidimensionalen Netzwerk verknüpft wird. Der Härter weist vorzugsweise mindestens zwei funktionelle Gruppen auf, die fähig sind, mit einem Bindemittel zu reagieren, und gleich oder verschieden sein können. Der Anteil des Härters/Beschleunigers in der beheizbaren Schicht (bzw. in der Dispersion) ist vorzugsweise stöchiometrisch mit Bezug auf das jeweilige Reaktivharz (d.h. der Härter/Beschleuniger liegt in einer solchen Menge vor, dass theoretisch nahezu jedes Härter/Beschleuniger-Molekül mit einem Reaktivharz-Molekül reagieren kann; vorzugsweise beträgt die Menge an Härter/Beschleuniger 80 bis 150% (wie 85 bis 130%, 90 bis 120%, 95 bis 110%, 97 bis 105%, 98 bis 102% oder 100%) bezogen auf die molare Menge des Reaktivharzes in der beheizbaren Schicht (bzw. in der Dispersion).

Es kann bevorzugt sein, dass die beheizbare Schicht (bzw. die Dispersion die mindestens ein Leitfähigkeitsadditiv, ausgewählt aus Leitfähigkeitsadditiven, die Graphit, Graphen und Ruß umfassen, enthält, die zur Erzeugung einer beheizbaren Schicht, die mindestens ein Leitfähigkeitsadditiv, ausgewählt aus Leitfähigkeitsadditiven, die Graphit, Graphen und Ruß umfassen, enthält, verwendbar ist) keine organischen Bindemittel enthält. In diesem Fall kann die beheizbare Schicht (bzw. die Dispersion) anstatt des elektrisch nicht leitenden Polymers ein oder mehrere anorganische Bindemittel umfassen. Der Begriff "anorganisches Bindemittel" betrifft erfindungsgemäß einen mineralischen Stoff, der beim Mischen mit Wasser eine insbesondere verarbeitbare Paste ergibt, die anschließend erhärtet bzw. erhärtbar ist. Vorzugsweise ist das anorganische Bindemittel im festen und/oder erhärteten Zustand elektrisch nicht leitend. Die Erhärtung kann hydraulisch (d.h. mit und unter Wasser; Beispiel: Zement, Magnesiabinder), carbonatisch (Beispiel: Kalk), hydratisch (Beispiel: Gips) oder anderweitig (z.B. polymerisch; Beispiel: Wasserglas) oder gemischt erfolgen. Beispiele für anorganische Bindemittel beinhalten in nicht begrenzender Weise Zement (wie Portlandzement, Tonerdezement (Calciumaluminate), Portlandschnellzement (Calciumsilicate, Anhydrit ($CaSO_4$)), Calciumsulfoaluminatzement (Ye'elimit, Belit, Anhydrit), Sulfathüttenzement (Hüttensand, Anhydrit, Calciumsilicate)), Kalk (wie Brandkalk (CaO) oder gelöschter Kalk ($Ca(OH)_2$)), Gips (wie Anhydrit ($CaSO_4$) Halbhydrat ($CaSO_4 \cdot 0{,}5\ H_2O$) oder Dihydrat ($CaSO_4 \cdot 2\ H_2O$)), Magnesiabinder (Magnesia, Magnesiumsalze), Wasserglas (Alkalisilicate, insbesondere Natron- und/oder Kalisilicate) und Geopolymere (z.B. Alumosilicate wie Tone). Bevorzugte Beispiele für anorganische Bindemittel sind gebrannter Kalk, gelöschter Kalk, Wasserglas, Gips, Ton und Zement. Der Anteil des anorganischen Bindemittels in der beheizbaren Schicht kann 10 bis 95% (beispielsweise 20 bis 85%, 30 bis 80% oder 40 bis 75%) nach Gewicht betragen. Gleichfalls kann der Anteil des anorganischen Bindemittels in der Dispersion die mindestens ein Leitfähigkeitsadditiv, ausgewählt aus Leitfähigkeitsadditiven, die Graphit, Graphen und Ruß umfassen, enthält, und zur Erzeugung einer beheizbaren Schicht verwendbar ist, 10 bis 90% (beispielsweise 20 bis 80%, 30 bis 75% oder 40 bis 60%) nach Gewicht betragen.

Das mehrschichtige Verbundsystem ist insbesondere für Trockenbau geeignet, insbesondere für eine nachträgliche Wandmontage. Das mehrschichtige Verbundsystem ist insbesondere dann für eine nachträgliche Wandmontage geeignet, wenn die das mehrschichtige Verbundsystem bereits die im Folgenden beschriebenen Kontaktelemente und, optional, Anschlusselemente und/oder die zuvor beschriebene EMV-Schicht aufweist.

Wie oben erwähnt, wenn die Baustoffplatte aus einer Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte/ Fliesenverlegeplatte, Thermoplatte, Thermopanel, Thermovlies, Innendämmplatte, Klimaplatte oder Acrylglas, vorzugsweise aus einer Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Innendämmplatte, Klimaplatte oder Acrylglas, ausgewählt ist, ist das mehrschichtige Verbundsystem der vorliegenden Erfindung insbesondere geeignet für Trockenbau.

Kontaktelement und Anschlusselement (beides optional):

Das mehrschichte Verbundsystem kann ferner mindestens zwei elektrisch leitfähige Kontaktelemente aufweisen, die an den mehreren, voneinander räumlich getrennten Bereichen der beheizbaren Schicht derart angeordnet sind, dass alle der voneinander räumlich getrennten Bereiche der beheizbaren Schicht, vorzugsweise individuell, mit elektrischer Spannung und/oder elektrischem Strom beaufschlagbar sind.

Die Kontaktelemente können insbesondere Kontaktstreifen oder Kontaktbänder darstellen.

Die Kontaktelemente können in einer Ausführungsform als gerade Streifen ausgebildet sein. Allerdings ist die Form der Kontaktelemente auch für weitere Ausführungsformen nicht auf eine solche gerade Konfiguration beschränkt. Die Kontaktelemente können beispielsweise durch Streifen gebildet werden, die in der Hauptausdehnungsrichtung der Heizschicht kurvenförmig verläuft.

Die Breite der Kontaktelemente ist nicht kritisch. Jedoch sollten die Kontaktelemente derart dimensioniert sein, dass sie eine Beaufschlagung jedes einzelnen der mehreren, voneinander räumlich getrennten Bereiche der beheizbaren Schicht mit elektrischer Spannung und/oder elektrischem Strom, vorzugsweise über die gesamte Länge und/oder Breite jedes einzelnen der mehreren, voneinander räumlich getrennten Bereiche der beheizbaren Schicht erlauben. Beispielsweise kann die Breite der Kontaktelemente in Bezug zur Breite eines Bereiches der mehreren, voneinander räumlich getrennten Bereiche der beheizbaren Schicht, ausgewählt werden. Eine geeignete Breite der Kontaktelemente kann im Bereich von 1/10 bis 1/40 (vorzugsweise 1/12 bis 1/32, wie 1/16 bis 1/24, wie ein 1/20) der Breite des jeweiligen Bereiches der mehreren, voneinander räumlich getrennten Bereiche der beheizbaren Schicht betragen. Die absolute Breite der Kontaktelemente kann im Bereich von 1,0 bis 8,0 cm (vorzugsweise 1,5 bis 6,5 cm, wie 2,0 bis 5,0 cm oder 2,5 bis 3,5 cm) liegen, wobei die Summe der Breiten der Kontaktelemente maximal die Hälfte der Breite des jeweiligen Bereiches der mehreren, voneinander räumlich getrennten Bereiche der beheizbaren Schicht, betragen sollte.

Die Kontaktelemente können auf jegliche bekannte Weise auf der Baustoffplatte oder auf einer auf der Baustoffplatte befindlichen Schicht, falls vorhanden, angebracht werden, z.B. mittels Aufkleben, thermischen Spritzen (wie Lichtbogenspritzen) oder Plasmaspritzen. Für eine einfache Handhabung und Herstellung des mehrschichtigen Verbundsystems ist jedoch ein Aufkleben der Kontaktelemente auf der Baustoffplatte oder auf einer auf der Baustoffplatte befindlichen Schicht, falls vorhanden, bevorzugt. Für diese Ausführungsform weisen die Kontaktelemente vorzugsweise eine Klebschicht auf.

Wie oben erwähnt, kann das mehrschichtige Verbundsystem der vorliegenden Erfindung weitere Schichten zwischen der beheizbaren Schicht umfassen, beispielsweise eine Grundierschicht. Um einen, insbesondere ungehinderten, Stromfluss zwischen den Kontaktelementen und der beheizbaren Schicht zu gewährleisten, befinden sich die Kontaktelemente, senkrecht auf die Vorderseite der Baustoffplatte gesehen, daher üblicherweise direkt unterhalb oder direkt oberhalb der beheizbaren Schicht, vorzugsweise befinden sich die Kontaktelemente, auf die Vorderseite der Baustoffplatte gesehen, direkt unterhalb der beheizbaren Schicht. Sollten die Kontaktelemente dennoch direkt oberhalb der beheizbaren Schicht befinden und mittels einer Klebeschicht befestigt sein, so ist diese Klebeschicht elektrisch leitfähig.

Die mindestens zwei elektrisch leitfähigen Kontaktelemente können sich vollständig auf der Vorderseite der Baustoffplatte befinden oder durch die Baustoffplatte auf deren Rückseite geführt sein, vorzugsweise sind die mindestens zwei elektrisch leitfähigen Kontaktelemente durch die Baustoffplatte auf deren Rückseite geführt, wobei, falls eines oder mehrere der Kontaktelemente zwei oder mehrere der voneinander räumlich getrennten Bereiche der beheizbaren Schicht verbindet, die Durchführung dieses/dieser Kontaktelemente(s) durch die Baustoffplatte vorzugsweise nicht zwischen zwei, durch das jeweilige Kontaktelement verbundenen, Bereiche der beheizbaren Schicht erfolgt. Die Durchführung erfolgt üblicherweise durch einen Schlitz, der beispielsweise in die Baustoffplatte gefräst werden kann.

Vorzugsweise sind mindestens zwei der mindestens zwei elektrisch leitfähigen Kontaktelemente an sich gegenüberliegenden Randbereichen jedes der voneinander räumlich getrennten Bereiche der beheizbaren Schicht angeordnet.

Vorzugsweise weist jedes Kontaktelement mindestens ein Anschlusselement auf, das sich auf der Vordersite oder auf der Rückseite der Baustoffplatte befinden kann, vorzugsweise befinden sich die Anschlusselemente auf der Rückseite der Baustoffplatte, mehr bevorzugt weist jedes Kontaktelement mindestens zwei Anschlusselemente auf, noch mehr bevorzugt genau zwei Anschlusselemente auf, die sich vorzugsweise auf der Rückseite der Baustoffplatte befinden. Dies ist insbesondere bevorzugt, wenn die Kontaktelemente als Kontaktstreifen oder Kontaktbänder ausgeführt sind, wobei sich üblicherweise zwei Anschlusselemente an gegenüberliegenden Enden der Kontaktstreifen oder Kontaktbänder befinden. Die Anschlusselemente weisen üblicherweise eine höhere Dicke als die Kontaktelemente auf, daher ist es bevorzugt diese auf der Rückseite der Baustoffplatte anzuordnen, da diese häufig an Unterkonstruktionen angebracht werden, die hierfür ausreichend Platz bieten. Zudem müssen keine Vertiefungen für Kabel auf der Vorderseite der Baustoffplatte vorgesehen werden, die anschließend formschlüssig ausgefüllt werden müssen. Prinzipiell ist jegliches Material (wie Holz, Kunststoff (insbesondere thermostabiler Kunststoff) oder Metall) und jeglicher Aufbau (z.B. Latten mit einem Profil von 20 x 50 mm) oder Metallständer-Profile als U- oder C Profilausführung) als Unterkonstruktion geeignet. Beispiele beinhalten eine Lattung aus Holz (wie Dachlatten, insbesondere gehobelt und/oder aus Fichte) oder thermostabilem Kunststoff oder ein Metallständer-Profil als U- oder C-Profilausführung.

Sofern sich die Anschlusselemente auf der Vorderseite der Baustoffplatte befinden sind vorzugsweise Vertiefungen für die Anschlusselemente und, optional elektrische Leitungen, vorgesehen, um eine formschlüssige Vorderseite der Baustoffplatte und somit des mehrschichtigen Verbundsystems zu gewährleisten.

Die Anschlusselemente können vorzugsweise als Anschlussklemme ausgeführt sein, die z.B. als Stecker für eine Steckverbindung ausgeführt sein können oder ein Loch aufweisen, durch das ein Kabel, beispielsweise mittels Schraube und Kabelschuh, befestigt werden kann. Falls die Kontaktelemente als Kontaktstreifen oder Kontaktbänder ausgeführt sind, kann das Anschlusselement in das oder die Ende(n) der Kontaktstreifen oder Kontaktbänder eingeschlagen werden und mittels geeigneter Werkzeuge eingepresst werden.

Jedes Kontaktelement umfasst vorzugsweise einen elektrisch leitenden Metallstreifen, insbesondere aus Kupfer, wobei vorzugsweise jedes dieser Kontaktelemente eine Klebeschicht aufweist und die Gesamtdicke eines Kontaktelementes, ausgenommen des mindestens einen Anschlusselements, falls vorhanden, vorzugsweise maximal 120 $\mu$m, bevorzugt maximal 110 $\mu$m, mehr bevorzugt maximal 100 $\mu$m, mehr bevorzugt maximal 90 $\mu$m beträgt.

Die mindestens zwei elektrisch leitfähigen Kontaktelemente sind vorzugsweise parallel angeordnet und der Abstand zwischen ihren Innenkannten beträgt 30 bis 75 cm, sofern die mindestens zwei elektrisch leitfähigen Kontaktelemente derart angeordnet sind, dass derselbe der voneinander räumlich getrennten Bereiche der beheizbaren Schicht mit elektrischer Spannung und/oder elektrischem Strom beaufschlagbar ist.

Wie oben erwähnt ist das mehrschichtige Verbundsystem senkrecht auf die Vorderseite gesehen in einer Ausführungsform in mindestens 2 Teile, vorzugsweise mindestens 3 Teile, mehr bevorzugt mindestens 4 Teile trennbar, vorzugsweise entlang einer oder mehrerer gerader Linien, ohne dabei einen der voneinander räumlich getrennten Bereiche der beheizbaren Schicht zu durchtrennen, und wobei jedes der Teile des mehrschichtigen Verbundsystems mindestens einen der voneinander räumlich getrennten Bereiche der beheizbaren Schicht aufweist. Sofern das mehrschichtige Verbundsystem Kontaktelemente und/oder Anschlusselemente aufweist, sind diese vorzugsweise derart angeordnet, dass, nach der Trennung der mindestens 2 Teile, jeder der voneinander räumlich getrennten Bereiche der beheizbaren Schicht auf jedem der mindestens 2 Teile, vorzugsweise individuell, mit elektrischer Spannung und/oder elektrischem Strom beaufschlagbar ist.

Das mehrschichtige Verbundsystem ist vorzugsweise durch Beaufschlagung der beheizbaren Schicht mit einer Schutzkleinspannung betreibbar. Geeignete Spannungsquellen und Steuerungselemente hierfür werden unten, unter anderem im dritten erfindungsgemäßen Aspekt (Trockenbauelement), beschrieben.

Das erfindungsgemäße mehrschichtige Verbundsystem kann dazu verwendet werden, Temperaturen zu erzeugen, die üblicherweise im Inneren eines Hauses (wie eines Wohnhauses) vorgefunden werden, beispielsweise eine Temperatur im Bereich von 15 bis 30°C. Dabei kann die maximale Oberflächentemperatur der beheizbaren Schicht(en) bis zu 50°C betragen, insbesondere wenn die beheizbaren Schicht(en) sich in einem Bereich einer Wand befinden, der für Personen erreichbar ist (typischerweise in einem Bereich der Wand, der einen Abstand vom Boden von weniger als 2,5 m aufweist). Wenn die beheizbaren Schicht(en) sich in einem Bereich einer Wand befinden, der für Personen nicht erreichbar ist (typischerweise in einem Bereich der Wand, der mindestens einen Abstand von 2,5 m vom Boden aufweist, z.B. an einer Decke oder an einer entsprechenden Schräge eines Raumes), kann die maximale Oberflächentemperatur der beheizbaren Schicht(en) bis zu 120°C (wie bis zu 110°C, bis zu 100°C, bis zu 90°C, bis zu 80°C oder bis zu 70°C) betragen. In einer Ausführungsform ist auch vorgesehen, die erfindungsgemäße mehrschichtigen Verbundsysteme dazu zu verwenden, höhere als übliche Raumtemperaturen zu erreichen, beispielsweise Temperaturen, die in einer Sauna vorgefunden werden (z.B. 80°C bis 120°C, wie 85°C bis 110°C).

Das erfindungsgemäße mehrschichtige Verbundsystem ist insbesondere dazu geeignet ist, einen Raum zu beheizen, wobei es nicht darauf ankommt, wie der Raum ausgestattet ist oder wo er sich befindet. Z.B. kann der Raum ein Teil eines Hauses oder Gebäudes (d.h. immobil) sein; der Begriff "Raum" schließt aber auch mobile Varianten (wie Container) ein. Der Begriff "Wand" schließt erfindungsgemäß jegliche Begrenzung eines Raumes ein, wobei Fenster ausgeschlossen sind. Der Begriff "Wand" umfasst insbesondere neben den vertikalen Wänden (tragend oder nicht tragend) auch eventuell vorhandene Trennwände, eventuell vorhandene Schrägen und Decken des Raumes (einschließlich Abhängdecke).

Das erfindungsgemäße mehrschichtige Verbundsystem weist den Vorteil auf, dass es zum Beheizen von Räumen verwendet werden kann, in denen die Raumluft möglichst wenig bewegt werden soll (z.B. Patientenzimmer oder Operationssäle von Krankenhäusern, Zimmer von Allergikern, etc.). Ein weiterer Vorteil besteht darin, dass das erfindungsgemäße mehrschichtige Verbundsystem direkt an einer Wand angebracht ist und bei Betrieb der beheizbaren Schicht(en) die Temperatur dieser Wand über der Raumtemperatur liegt. Folglich wird Wasser, das sich an (oder in) dieser Wand befindet, eher verdunsten (im Gegensatz zu herkömmlichen Systemen, bei denen Wasser eher an den Wänden kondensiert), was insgesamt einer Schimmelbildung vorbeugt. Ein weiterer Vorteil liegt darin, dass mittels des erfindungsgemäßen mehrschichtigen Verbundsystems (insbesondere deren beheizbarer Schicht(en)) elektromagnetische Strahlung abschirmbar ist. Um diese Abschirmung zu erreichen, wird die beheizbare Schicht, oder, falls die beheizbare Schicht des Verbundsystems aus mehreren, voneinander räumlich getrennten Bereichen besteht, diese Bereiche, nicht mit elektrischen Strom oder elektrischer Spannung beaufschlagt, sondern auf Erdung gelegt.

*Verfahren zur Herstellung des mehrschichtigen Verbundsystems:*

Die vorliegende Erfindung ist ferner auf ein Verfahren zur Herstellung eines mehrschichtigen Verbundsystems der vorliegenden Erfindung gerichtet, welches die folgenden Schritte umfasst:

a) Bereitstellen einer Baustoffplatte wie in der vorliegenden Anmeldung definiert, und
b) Auftragen einer Heizfarbe, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, auf die Vorderseite der Baustoffplatte.

Das Auftragen der Heizfarbe erfolgt vorzugsweise mittels Rollen, Sprühen, Streichen, Pinseln, Rakeln, Spachteln, Drucken oder einer Kombination davon, insbesondere Siebdruck.

Vorzugsweise umfasst das Verfahren den folgenden Schritt a1), welcher nach Schritt a) und vor Schritt b) durchgeführt wird:
a1) Aufbringen einer Grundierungsschicht auf die Baustoffplatte, beispielsweise mittels Rollen, Sprühen, Streichen, Pinseln, Rakeln, Spachteln, vorzugsweise mittels Rollen.

Das Verfahren umfasst vorzugsweise den folgenden Schritt a2), welcher nach Schritt a) bzw. Schritt a1), falls vorhanden und vor oder nach Schritt b), vorzugsweise vor Schritt b), durchgeführt wird:
a2) Anbringen der mindestens zwei Kontaktelemente auf die Baustoffplatte, die Grundierschicht, falls vorhanden, oder ggf weitere vorhandene Schichten.

Geeignete Verfahren zur Anbringung der Kontaktelemente sind oben aufgeführt. Die Anschlusselemente, sofern vorhanden, können vor oder nach Anbringen der mindestens zwei Kontaktelemente in Schritt a2) an die Kontaktelemente angebracht werden. Vorzugsweise werden die Anschlusselemente, sofern vorhanden, vor Anbringen der mindestens zwei Kontaktelemente in Schritt a2) an die Kontaktelemente angebracht und in Schritt a2) ebenfalls an die Baustoffplatte, die Grundierschicht, falls vorhanden, oder ggf. weitere vorhandene Schichten angebracht.

Falls das erfindungsgemäße mehrschichtige Verbundsystem eine EMV-Schicht aufweist, so wird diese vor Schritt a2), sofern vorhanden, bzw. b) durchgeführt, je nachdem, welcher der Schritte a2), sofern vorhanden, oder b) zuerst ausgeführt wird.

*Trockenbauelement:*

Die vorliegende Erfindung ist ferner gerichtet auf ein Trockenbauelement, aufweisend ein erfindungsgemäßes, mehrschichtiges Verbundsystem.

Vorzugsweise

a) umfasst das mehrschichtige Verbundsystem des Trockenbauelementes mindestens zwei elektrisch leitfähige Kontaktelemente wie hierin definiert,
b) umfasst das Trockenbauelement ein Steuerungselement, das eine Spannungsquelle, vorzugsweise eine Spannungsquelle für Schutzkleinspannung, und eine Steuerungsvorrichtung zum Steuern der beheizbaren Schicht, und
c) umfasst das Trockenbauelement zwei elektrische Leitungen, wobei die erste elektrische Leitung mit einem der Pole der Spannungsquelle verbunden ist und die zweite elektrische Leitung mit dem anderen Pol der Spannungsquelle verbunden ist,

wobei die erste elektrische Leitung mit einem der mindestens zwei elektrisch leitfähigen Kontaktelementen elektrisch leitend verbunden ist und die zweite elektrische Leitung mit einem anderen der mindestens zwei elektrisch leitfähigen Kontaktelementen elektrisch leitend verbunden ist, vorausgesetzt, dass diese zwei elektrisch leitfähigen Kontaktelemente mit demselben oder denselben voneinander räumlich getrennten Bereich(en) der beheizbaren Schicht in elektrisch leitendem Kontakt stehen, wobei vorzugsweise die elektrisch leitende Verbindung zwischen der ersten elektrischen Leitung und der zweiten elektrischen Leitung und dem jeweiligen elektrisch leitfähigen Kontaktelement mittels des Anschlusselements wie hierin definiert erfolgt.

Bezüglich des Kontaktelementes wird vollinhaltlich auf den ersten erfindungsgemäßen Aspekt (mehrschichtiges Verbundsystem) verwiesen.

Das Steuerungselement ist im Folgenden beschrieben.

*Steuerungselement*

Das Steuerungselement umfasst eine Spannungsquelle (zur Bereitstellung von elektrischer Spannung und/oder elektrischem Strom) und eine Steuerungsvorrichtung zum Steuern der beheizbaren Schicht.

Der Begriff "Spannungsquelle" soll erfindungsgemäß eine jegliche elektrische Energiequelle umfassen, die geeignet ist, eine elektrische Spannung und/oder einen elektrischen Strom bereitzustellen. In einer Ausführungsform ist die Spannungsquelle ein Netzteil, d.h. ein Gerät oder eine Baugruppe, das/die an das Hausstromnetz (typischerweise 230 V AC $\pm$ 10%, 50/60 Hz) angeschlossen werden kann und andere Geräte oder Baugruppen, die andere Spannungen und/oder Ströme benötigen, als vom Hausstromnetz bereitgestellt wird, mit Energie versorgt. Das Netzteil kann ein Schalt- oder Trafonetzteil sein. In einer Ausführungsform stellt die Spannungsquelle eine Wechselspannung (insbesondere im Schutzkleinspannungsbereich) bereit oder ist derart konfiguriert und ausgestaltet, eine Wechselspannung (insbesondere im Schutzkleinspannungsbereich) bereitzustellen. In einer alternativen Ausführungsform stellt die Spannungsquelle eine Gleichspannung (insbesondere im Schutzkleinspannungsbereich) bereit oder ist derart konfiguriert und ausgestaltet, eine Gleichspannung (insbesondere im Schutzkleinspannungsbereich) bereitzustellen.

In einer Ausführungsform ist die Spannungsquelle derart ausgelegt und konfiguriert, mehr als eine (z.B. mindestens 2, mindestens 3 oder mindestens 4) beheizbare Schichten und/oder mehrere, voneinander räumlich getrennte Bereiche einer beheizbaren Schicht, mit Spannung (und/oder elektrischem Strom) gleichzeitig versorgen zu können. Beispielsweise können alle der beheizbaren Schichten bzw. alle der mehreren, voneinander räumlich getrennten Bereiche einer beheizbaren Schicht mit derselben elektrischen Spannung (und/oder demselben elektrischem Strom) beaufschlagt werden. Vorzugsweise können alle der beheizbaren Schichten, bzw. alle der mehreren voneinander räumlich getrennten Bereiche einer beheizbaren Schicht individuell mit elektrischer Spannung und/oder elektrischem Strom beaufschlagt werden, d.h. alle der beheizbaren Schichten, bzw. alle der mehreren voneinander räumlich getrennten Bereiche einer beheizbaren Schicht sind derart ausgestaltet, dass alle der beheizbaren Schichten, bzw. alle der mehreren voneinander räumlich getrennten Bereiche einer beheizbaren Schicht mit jeweils unterschiedlicher elektrischer Spannung und/oder unterschiedlichem elektrischen Strom beaufschlagbar sind.

Die Steuerungsvorrichtung ist vorzugsweise derart konfiguriert und ausgestaltet, die beheizbare(n) Schicht(en) und/oder, die mehreren, voneinander räumlich getrennten Bereiche einer beheizbaren Schicht, zu steuern, d.h. zu steuern, mit welcher elektrischen Spannung und/oder welchem elektrischen Strom die beheizbare(n) Schicht(en), und/oder, die mehreren, voneinander räumlich getrennten Bereiche einer beheizbaren Schicht, beaufschlagt wird (werden), um die gewünschte Temperatur zu erreichen.

In einer bevorzugten Variante dieser Ausführungsform ist die Steuerungsvorrichtung derart ausgelegt und konfiguriert, dass jede der mehr als einer beheizbaren Schicht, und/oder die mehreren, voneinander räumlich getrennten Bereichen einer beheizbaren Schicht, individuell, d.h. mit einer unterschiedlichen Spannung (und/oder elektrischem Strom), beaufschlagbar ist. Hierdurch kann eine Feinabstimmung der Heizleistung der einzelnen beheizbaren Schicht(en), und/oder der mehreren, voneinander räumlich getrennten Bereichen einer beheizbaren Schicht, erreicht werden und beispielsweise eine Heizung, die dem Benutzer "zu warm" ist, heruntergedreht werden oder eine zu kalte Fläche etwas heraufgedreht werden. Insbesondere bevorzugt in dieser Variante ist, dass das Steuerungselement derart ausgelegt und konfiguriert ist, dass die Spannung (und/oder der elektrische Strom), die(der) an jede einzelne (der) beheizbare(n) Schicht(en) und/oder, an jeden einzelnen der mehreren, voneinander räumlich getrennten Bereichen der beheizbaren Schicht, angelegt wird, in dem Steuerungselement voreinstellbar ist, insbesondere bevorzugt ist, dass das Steuerungselement derart ausgelegt und konfiguriert ist, dass die Spannung (und/oder der elektrische Strom), die (der) an jede einzelne (der) beheizbare(n) Schicht(en), und/oder, an jeden einzelnen der mehreren, voneinander räumlich getrennten Bereichen der beheizbaren Schicht, angelegt wird, relativ zueinander in dem Steuerungselement voreinstellbar ist. Beispielsweise ließe sich bei zwei beheizbaren Schichten A und B voreinstellen, dass die beheizbare Schicht A mit 90% der Spannung (und/oder des elektrischen Stroms) der beheizbaren Schicht B betrieben wird oder, dass Schicht A mit 2 V weniger als Schicht B betrieben wird etc.

Hierzu ist es zweckmäßig, dass in einer Ausführungsform das Steuerungselement einen Thermostat aufweist, der insbesondere derart konfiguriert und ausgestaltet ist, die Temperatur des Raumes, in dem sich das(die) erfindungsgemäße(n) mehrschichtige(n) Verbundsysteme befindet(befinden), messen und gegebenenfalls überwachen zu können. Zweckmäßig ist der Thermostat derart konfiguriert und ausgestaltet, mit der Steuerungsvorrichtung kommunizieren zu können. Vorteilhafterweise ist der Thermostat in dem Raum, in dem sich das erfindungsgemäße mehrschichtige Verbundsystem befindet, angebracht, jedoch vorzugsweise nicht direkt neben einer beheizbaren Schicht des erfindungsgemäßen mehrschichtigen Verbundsystems, sondern eher an einer Wand, auf der keine beheizbare Schicht aufgebracht ist (beispielsweise kann sich der Thermostat an einer Wand des Raumes befinden, die der Wand gegenüberliegt, an die das mehrschichtige Verbundsystem angebracht ist). In einer Ausführungsform ist der Thermostat derart konfiguriert und ausgestaltet, dass an ihm die gewünschte Raumtemperatur (Solltemperatur) einstellbar ist.

In einer Ausführungsform misst die Steuerungsvorrichtung im Betrieb fortwährend den elektrischen Strom, der durch die beheizbare(n) Schicht(en) und/oder durch die mehreren, voneinander räumlich getrennten Bereiche einer beheizbaren Schicht, fließt, und vergleicht diesen mit einem Normalwert/Referenzwert. Dadurch kann sichergestellt werden, dass Fehlfunktionen einer beheizbaren Schicht und/oder, einer der mehreren, voneinander räumlich getrennten Bereiche einer beheizbaren Schicht, (z.B. Funkenbildung) oder mechanische Änderungen an der zu beheizenden Wand nicht zu einer unsicheren Situation bzw. Gefährdung von Personen und/oder Tieren führen.

Beispielsweise weist in einer Ausführungsform das Steuerungselement eine Abschaltautomatik der Spannungsquelle auf. Hierzu kann das Steuerungselement derart konfiguriert und ausgestaltetet sein, dass es die Entstehung von Funken auf der beheizbaren Schicht und/oder auf einem der mehreren, voneinander räumlich getrennten Bereiche einer beheizbaren Schicht, erkennt und bei Auftreten derartiger Funken die Abschaltautomatik aktiviert, d.h. die Spannungsquelle abschaltet. Alternativ oder zusätzlich ist das Steuerungselement derart konfiguriert und ausgestaltetet, dass es überwacht, welche Strommenge durch die beheizbare Schicht und/oder durch einen der mehreren, voneinander räumlich getrennten Bereiche einer beheizbaren Schicht fließt, und bei einer Abweichung von mindestens 1 % (wie mindestens 5% oder mindestens 10%) des durch die beheizbare Schicht, und/oder, durch einen der mehreren, voneinander räumlich getrennten Bereichen einer beheizbaren Schicht, fließenden Stroms vom Normalwert/Referenzwert die Abschaltautomatik aktiviert, d.h. die Spannungsquelle abschaltet.

In einer Ausführungsform weist das Steuerungselement einen Temperatursensor, der auf der beheizbaren Schicht angebracht werden kann, auf. Der Temperatursensor ist vorteilhafterweise derart ausgestaltet und konfiguriert, die Temperatur unmittelbar auf oder über der beheizbaren Schicht und/oder auf oder über einem der mehreren, voneinander räumlich getrennten Bereiche einer beheizbaren Schicht, (falls weitere Schichten über der beheizbaren Schicht, bzw. eines der Bereiche, aufgetragen wurden) zu messen und die Messdaten an den Thermostat und/oder die Steuerungsvorrichtung weiterzuleiten. Dadurch ist eine Gefährdung durch eine übermäßig heiße beheizbare Schicht und/oder einen übermäßig heißen Bereich der mehreren, voneinander räumlich getrennten Bereiche einer beheizbaren Schicht, (z.B. mit einer Temperatur an der Oberfläche der beheizbaren Schicht, bzw. eines der Bereiche, von über 50°C (insbesondere falls die beheizbare Schicht, bzw. einer der Bereiche, an einem Bereich einer Wand angebracht ist, der für Personen erreichbar ist)) oder mit einer Temperatur an der Oberfläche der beheizbaren Schicht von über 70°C oder über 120°C (insbesondere falls die beheizbare Schicht oder, falls die beheizbare Schicht des mehrschichtigen Verbundsystems aus mehreren, voneinander räumlich getrennten Bereichen besteht, diese Bereiche, an einem Bereich einer Wand angebracht ist, der für Personen nicht erreichbar ist)) verhinderbar.

Das Steuerungselement kann in dem Raum, der das mehrschichtige Verbundsystem enthält, angebracht sein. In einer alternativen Ausführungsform kann sich das Steuerungselement an einem anderen Ort (z.B. in einem Nebenraum, in einem zentralen Schalt- oder Sicherungsraum, an den der zu beheizende Raum angeschlossen ist, oder in einem Keller) befinden.

*Wand und/oder Decke:*

Die vorliegende Erfindung ist ferner gerichtet auf eine Wand und/oder Decke, enthaltend ein mehrschichtiges Verbundsystem gemäß der vorliegenden Erfindung oder ein Trockenbauelement gemäß der vorliegenden Erfindung.

Bezüglich der Ausgestaltung der Komponenten der erfindungsgemäßen Wand und/oder Decke wird vollumfänglich auf den ersten (mehrschichtiges Verbundsystem) und dritten (Trockenbauelement) erfindungsgemäßen Aspekt verwiesen.

*Kit zum Herstellen eines Trockenbauelementes:*

Bezüglich der Ausgestaltung der Komponenten des erfindungsgemäßen Kits wird vollinhaltlich auf die vorstehenden Ausführungen bezüglich des ersten (mehrschichtiges Verbundsystem) und dritten (Trockenbauelement) erfindungsgemäßen Aspekt verwiesen.

Weiterhin kann in einer Ausführungsform des erfindungsgemäßen Kits das Steuerungselement eine Abschaltautomatik der Spannungsquelle und/oder einen Thermostat aufweisen, wie es hierin für den dritten (Trockenbauelement) erfindungsgemäßen Aspekt beschrieben ist auf den vollinhaltlich verwiesen wird.

*Kit zur Herstellung eines mehrschichtigen Verbundsystems*

Bezüglich der Ausgestaltung der Komponenten des erfindungsgemäßen Kits wird vollinhaltlich auf die vorstehenden Ausführungen bezüglich des ersten (mehrschichtiges Verbundsystem) und dritten (Trockenbauelement) erfindungsgemäßen Aspekts verwiesen.

Weiterhin kann in einer Ausführungsform des erfindungsgemäßen Kits das Steuerungselement eine Abschaltautomatik der Spannungsquelle und/oder einen Thermostat aufweisen, wie es hierin für das erfindungsgemäße Trockenbauelement des dritten Aspekts beschrieben ist.

*Verwendungen:*

Das erfindungsgemäße, mehrschichtige Verbundsystem, das erfindungsgemäße Trockenbauelement, ein mittels des erfindungsgemäßen Kits hergestelltes Trockenbauelement (fünfter erfindungsgemäßer Aspekt) und ein mittels des erfindungsgemäßen Kits hergestelltes Verbundsystem (sechster erfindungsgemäßer Aspekt) können zum Beheizen eines Raumes oder zum Abschirmen eines Raumes vor elektromagnetischer Strahlung verwendet werden.

Hinsichtlich der Ausgestaltung der erfindungsgemäßen Verwendung wird vollinhaltlich auf die vorstehenden Ausführungen bezüglich des ersten (mehrschichtiges Verbundsystem), dritten (Trockenbauelement), fünften (Kit zum Herstellen eines Trockenbauelementes) und sechsten (Kit zur Herstellung eines mehrschichtigen Verbundsystems) erfindungsgemäßen Aspekts Bezug genommen.

*Verfahren:*

Ein oder mehrere erfindungsgemäße Verbundsystem(e) kann/können an eine Wand und/oder Decke angebracht werden und durch Beaufschlagen der beheizbaren Schicht(en), des(der) mehrschichtigen Verbundsystems(-systeme) und/oder der mehreren, voneinander räumlich getrennten Bereiche einer beheizbaren Schicht mit elektrischer Spannung und/oder elektrischem Strom kann ein Raum beheizt werden.

Hinsichtlich der Ausgestaltung des erfindungsgemäßen Verfahrens wird vollinhaltlich auf die vorstehenden Ausführungen bezüglich des ersten (mehrschichtiges Verbundsystem) erfindungsgemäßen Aspektes verwiesen.

Die Beaufschlagung der beheizbaren Schicht(en) des(der) mehrschichtigen Verbundsystems (-systeme) mit elektrischer Spannung und/oder elektrischem Strom erfolgt vorzugsweise durch ein Steuerungselement, elektrische Leitungen, Kontaktelemente und/oder Anschlusselemente wie hierin im ersten (mehrschichtiges Verbundsystem) und dritten (Trockenbauelement) erfindungsgemäßen Aspekt beschrieben, auf die vollinhaltlich Bezug genommen wird.

Nachstehend werden unter Bezugnahme auf die beigefügte Figur ein bevorzugtes Ausführungsbeispiel beschrieben, das allerdings nicht begrenzend für die Erfindung ist und lediglich als beispielhafte Ausführungsform der Erfindung verstanden werden soll. Die Elemente der Figur sind nicht notwendigerweise maßstabsgetreu zueinander gezeigt. Sofern nicht anders angegeben werden in der Figur gleiche, funktionsgleiche und gleich wirkende Elemente mit denselben Bezugszeichen bezeichnet.

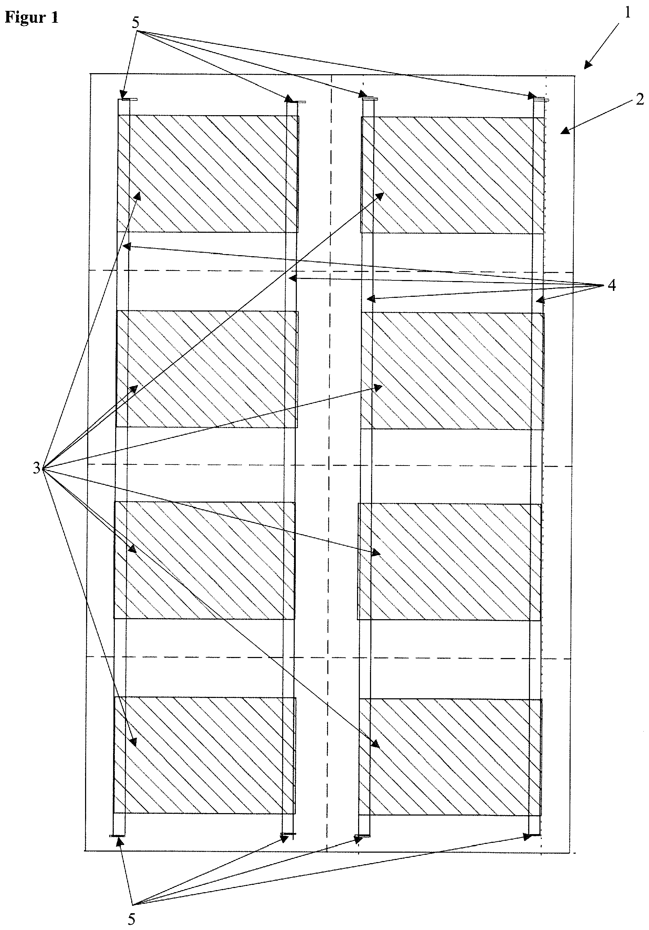

Figur 1 ist eine schematische, nicht maßstabsgetreue Vorderansicht eines bevorzugten Ausführungsbeispiels des mehrschichtigen Verbundsystems (1) der vorliegenden Erfindung. Das mehrschichte Verbundsystem (1) weist eine Baustoffplatte (2) und acht voneinander räumlich getrennte Bereiche (3) der beheizbaren Schicht auf. Des Weiteren befinden sich in dem mehrschichten Verbundsystem (1) vier Kontaktelemente (4), die sich von oberhalb der beiden oberen Bereiche der beheizbaren Schicht bis unterhalb der beiden unteren Bereiche der beheizbaren Schicht erstrecken. Diese Ausführungsform kann dadurch hergestellt werden, dass die Kontaktelemente (4) (z.B. Kupferbänder) auf der (eventuell bereits grundierten) Baustoffplatte (2) angebracht werden (beispielsweise mittels einer Klebschicht (nicht gezeigt)). Die Kontaktelemente können Anschlusselemente aufweisen (nicht in der Figur gezeigt), die auf die Rückseite der Baustoffplatte durch Schlitze (5) geführt sein können. Danach werden die voneinander räumlich getrennten Bereiche (3) der beheizbaren Schicht unter Verwendung einer Dispersion, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, aufgetragen wie hierin beschrieben, beispielsweise mittels Siebdruck, wobei die voneinander räumlich getrennten Bereiche (3) der beheizbaren Schicht zumindest teilweise die Kontaktelemente (4) bedecken, vorzugsweise, wie in Figur 1 gezeigt, erstrecken sich die voneinander räumlich getrennten Bereiche (3) der beheizbaren Schicht vollständig über die Breite des jeweiligen Kontaktelementes (4). Auf der beheizbaren Schicht können weitere Schichten aufgebracht sein (nicht gezeigt), wie hierin im ersten (mehrschichtiges Verbundsystem) erfindungsgemäßen Aspekt beschrieben.

Bezugszeichenliste

1      mehrschichtiges Verbundsystem
2      Baustoffplatte
3      voneinander räumlich getrennte Bereiche der beheizbaren Schicht
4      Kontaktelemente
5      Schlitze

Die Erfindung ist ferner durch die folgenden Punkte charakterisiert:

1. Mehrschichtiges Verbundsystem, aufweisend eine Baustoffplatte und eine beheizbare Schicht, wobei die Vorderseite der Baustoffplatte der beheizbaren Schicht zugewandt ist und die beheizbare Schicht aus mehreren, voneinander räumlich getrennten Bereichen besteht.

2. Mehrschichtiges Verbundsystem gemäß Punkt 1, wobei die Gesamtfläche der beheizbaren Schicht 10 bis 90%, vorzugsweise 20 bis 80%, mehr bevorzugt 30 bis 70%, noch mehr bevorzugt 40 bis 60%, der Fläche der Vorderseite der Baustoffplatte ausmacht.

3. Mehrschichtiges Verbundsystem gemäß einem der vorangegangen Punkte, wobei das Verbundsystem für Trockenbau geeignet ist, insbesondere für eine nachträgliche Wandmontage geeignet ist.

4. Mehrschichtiges Verbundsystem gemäß einem der vorangegangen Punkte, wobei die Baustoffplatte ausgewählt ist aus einer Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Thermovlies, Innendämmplatte, Klimaplatte oder Acrylglas.

5. Mehrschichtiges Verbundsystem gemäß einem der vorangegangenen Punkte, wobei die Baustoffplatte brandhemmend ausgestattet ist.

6. Mehrschichtiges Verbundsystem gemäß einem der vorangegangenen Punkte, ferner aufweisend eine EMV-Schicht.

7. Mehrschichtiges Verbundsystem gemäß einem der vorangegangen Punkte, wobei die beheizbare Schicht des Verbundsystems aus mindestens 4, vorzugsweise 4 bis 12, mehr bevorzugt 6 bis 10, voneinander räumlich getrennten Bereichen besteht.

8. Mehrschichtiges Verbundsystem gemäß einem der vorangegangen Punkte, wobei jeder der voneinander räumlich getrennten Bereiche die Form eines Rechtecks oder Parallelogramms aufweist und insbesondere eine Fläche von 0,01 bis 1,00 m$^2$, vorzugsweise 0,05 bis 0,50 m$^2$ aufweist.

9. Mehrschichtiges Verbundsystem gemäß einem der vorangegangen Punkte, wobei die Flächen der einzelnen, voneinander räumlich getrennten Bereiche der beheizbaren Schicht folgende Bedingung erfüllen:

$$F(A)/F(B) \leq 1{,}30{,}$$

vorzugsweise

$$F(A)/F(B) \leq 1{,}10{,}$$

mehr bevorzugt

$$F(A)/F(B) \leq 1{,}05{,}$$

wobei

F(A)   die Fläche des größten der voneinander räumlich getrennten Bereiche der beheizbaren Schicht innerhalb des Verbundsystems ist, und

F(B)   die Fläche des kleinsten der voneinander räumlich getrennten Bereiche der beheizbaren Schicht innerhalb des Verbundsystems ist.

10. Mehrschichtiges Verbundsystem gemäß einem der vorangegangen Punkte, wobei die beheizbare Schicht mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst.

11. Mehrschichtiges Verbundsystem gemäß Punkt 10, wobei die beheizbare Schicht mindestens zwei Leitfähigkeitsadditive, ausgewählt aus Leitfähigkeitsadditiven, die Graphit, Graphen und Ruß umfassen, umfasst und frei von elektrisch leitfähigen Carbonfasern und Kohlenstoff-Nanotubes ist.

12. Mehrschichtiges Verbundsystem gemäß einem der vorangegangen Punkte, wobei das Verbundsystem ferner mindestens zwei elektrisch leitfähige Kontaktelemente aufweist, die an den voneinander räumlich getrennten Bereichen der beheizbaren Schicht derart angeordnet sind, dass alle der voneinander räumlich getrennten Bereiche der beheizbaren Schicht, vorzugsweise individuell, mit elektrischer Spannung und/oder elektrischem Strom beaufschlagbar sind.

13. Mehrschichtiges Verbundsystem gemäß Punkt 12, wobei die mindestens zwei elektrisch leitfähigen Kontaktelemente durch die Baustoffplatte auf deren Rückseite geführt sind, wobei, falls eines oder mehrere der Kontaktelemente zwei oder mehrere der voneinander räumlich getrennten Bereiche der beheizbaren Schicht verbindet, die Durchführung dieses/dieser Kontaktelemente(s) durch die Baustoffplatte vorzugsweise nicht zwischen zwei, durch das jeweilige Kontaktelement verbundenen, Bereiche der beheizbaren Schicht erfolgt.

14. Mehrschichtiges Verbundsystem gemäß einem der Punkte 12 oder 13 wobei zwei der mindestens zwei elektrisch leitfähigen Kontaktelemente an sich gegenüberliegenden Randbereichen jedes der voneinander räumlich getrennten Bereiche der beheizbaren Schicht angeordnet sind.

15. Mehrschichtiges Verbundsystem gemäß einem der Punkte 12 bis 14, wobei jedes Kontaktelement mindestens ein Anschlusselement, das sich vorzugsweise auf der Rückseite der Baustoffplatte befindet, aufweist.

16. Mehrschichtiges Verbundsystem gemäß einem der Punkte 12 bis 15, wobei jedes Kontaktelement einen elektrisch leitenden Metallstreifen, insbesondere aus Kupfer, umfasst, wobei vorzugsweise jedes dieser Kontaktelemente eine Klebeschicht aufweist und die Gesamtdicke eines Kontaktelementes, ausgenommen des mindestens einen Anschlusselements, falls vorhanden, vorzugsweise maximal 120 $\mu$m, bevorzugt maximal 110 $\mu$m, mehr bevorzugt maximal 100 $\mu$m, mehr bevorzugt maximal 90 $\mu$m beträgt.

17. Mehrschichtiges Verbundsystem gemäß einem der vorangegangen Punkte 12 bis 16, wobei, die mindestens zwei elektrisch leitfähigen Kontaktelemente parallel angeordnet sind und der Abstand zwischen ihren Innenkannten 30 bis 75 cm beträgt, sofern die mindestens zwei elektrisch leitfähigen Kontaktelemente derart angeordnet sind, dass derselbe der voneinander räumlich getrennten Bereiche der beheizbaren Schicht mit elektrischer Spannung und/oder elektrischem Strom beaufschlagbar ist.

18. Mehrschichtiges Verbundsystem gemäß einem der vorangegangen Punkte, wobei das mehrschichtige Verbundsystem senkrecht auf die Vorderseite gesehen in mindestens 2 Teile, vorzugsweise mindestens 3 Teile, mehr bevorzugt in mindestens 4 Teile, trennbar ist, ohne dabei einen der voneinander räumlich getrennten Bereiche der beheizbaren Schicht zu durchtrennen und jeder der Teile des mehrschichtigen Verbundsystems nach der Trennung mindestens einen der voneinander räumlich getrennten Bereiche der beheizbaren Schicht aufweist, und die Kontaktelemente und Anschlusselemente, falls jeweils vorhanden, derart angeordnet sind, dass, nach der Trennung der mindestens 2 Teile, jeder der voneinander räumlich getrennten Bereiche der beheizbaren Schicht auf jedem der mindestens 2 Teile mit elektrischer Spannung und/oder elektrischem Strom beaufschlagbar ist.

19. Mehrschichtiges Verbundsystem gemäß einem der vorangegangen Punkte, wobei die beheizbare Schicht durch Beaufschlagung mit einer Schutzkleinspannung betreibbar ist.

20. Verfahren zur Herstellung eines mehrschichtigen Verbundsystems gemäß einem der Punkte 1 bis 19, umfassend die Schritte

    a) Bereitstellen einer Baustoffplatte wie in den Punkten 1 bis 19 definiert, und
    b) Auftragen einer Heizfarbe, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, auf die Vorderseite der Baustoffplatte.

21. Verfahren gemäß Punkt 20, wobei das Auftragen der Heizfarbe mittels Rollen, Sprühen, Streichen, Pinseln, Rakeln, Spachteln, Drucken oder einer Kombination davon, insbesondere Siebdruck, erfolgt.

22. Trockenbauelement, aufweisend ein mehrschichtiges Verbundsystem gemäß einem der Punkte 1 bis 19.

23. Trockenbauelement gemäß Punkt 22, wobei

    a) das mehrschichtige Verbundsystem mindestens zwei elektrisch leitfähige Kontaktelemente wie in Punkt 12 bis 17 definiert umfasst,
    b) das Trockenbauelement ein Steuerungselement, das eine Spannungsquelle, vorzugsweise eine Spannungsquelle für Schutzkleinspannung, und eine Steuerungsvorrichtung zum Steuern der beheizbaren Schicht umfasst, und
    c) das Trockenbauelement zwei elektrische Leitungen umfasst, wobei die erste elektrische Leitung mit einem der Pole der Spannungsquelle verbunden ist und die zweite elektrische Leitung mit dem anderen Pol der Spannungsquelle verbunden ist,

wobei die erste elektrische Leitung mit einem der mindestens zwei elektrisch leitfähigen Kontaktelementen elektrisch leitend verbunden ist und die zweite elektrische Leitung mit einem anderen der mindestens zwei elektrisch leitfähigen Kontaktelementen elektrisch leitend verbunden ist, vorausgesetzt, dass diese zwei elektrisch leitfähigen Kontaktelemente mit demselben oder denselben voneinander räumlich getrennten Bereich(en), falls vorhanden, der beheizbaren Schicht in elektrisch leitendem Kontakt stehen, wobei vorzugsweise die elektrisch leitende Verbindung zwischen der ersten elektrischen Leitung und der zweiten elektrischen Leitung und dem jeweiligen elektrisch leitfähigen Kontaktelement mittels des Anschlusselements wie in Punkt 16 definiert erfolgt.

24. Trockenbauelement gemäß Punkt 23, wobei das Steuerungselement eine Abschaltautomatik der Spannungsquelle aufweist, wobei vorzugsweise bei (I) Entstehung von Funken auf der beheizbaren Schicht oder (II) einer Abweichung von mindestens 1% des durch die beheizbare Schicht fließenden Stroms vom Normalwert die Abschaltautomatik aktiviert, d.h. die Spannungsquelle abgeschaltet wird.

25. Trockenbauelement gemäß einem der Punkte 23 und 24, wobei das Steuerungselement ferner einen Thermostat aufweist und/oder wobei die Steuerungsvorrichtung derart ausgelegt und konfiguriert ist, dass jeder der mehreren, voneinander räumlich

getrennte Bereiche der beheizbaren Schicht mit einer unterschiedlichen Spannung (und/oder elektrischem Strom) beaufschlagbar ist.

26. Wand und/oder Decke, enthaltend ein mehrschichtiges Verbundsystem gemäß einem der Punkte 1 bis 19 oder ein Trockenbauelement gemäß einem der Punkte 22 bis 25.

27. Kit zum Herstellen eines Trockenbauelementes, wobei das Kit umfasst:

(1) mindestens ein mehrschichtiges Verbundsystem gemäß einem der Punkte 1 bis 19,
(2) ein Steuerungselement, das eine Spannungsquelle, vorzugsweise eine Spannungsquelle für Schutzkleinspannung, und eine Steuerungsvorrichtung zum Steuern der beheizbaren Schicht umfasst,
(3) zwei elektrische Leitungen, wobei die erste elektrische Leitung mit einem der Pole der Spannungsquelle verbindbar oder verbunden ist und die zweite elektrische Leitung mit dem anderen Pol der Spannungsquelle verbindbar oder verbunden ist und die erste elektrische Leitung mit einem der mindestens zwei elektrisch leitfähigen Kontaktelementen elektrisch leitend verbindbar ist und die zweite elektrische Leitung mit einem der anderen der mindestens zwei elektrisch leitfähigen Kontaktelementen elektrisch leitend verbindbar ist.

28. Kit gemäß Punkt 27, wobei das Steuerungselement eine Abschaltautomatik der Spannungsquelle aufweist, wobei vorzugsweise bei (I) Entstehung von Funken auf der beheizbaren Schicht oder (II) einer Abweichung von mindestens 1% des durch die beheizbare Schicht fließenden Stroms vom Normalwert die Abschaltautomatik aktiviert, d.h. die Spannungsquelle abgeschaltet wird.

29. Kit gemäß einem der Punkte 27 und 28, wobei das Steuerungselement ferner einen Thermostat aufweist und/oder wobei die Steuerungsvorrichtung derart ausgelegt und konfiguriert ist, dass jeder der mehreren, voneinander räumlich getrennten Bereiche der beheizbaren Schicht mit einer unterschiedlichen Spannung (und/oder elektrischem Strom) beaufschlagbar ist.

30. Kit zur Herstellung eines mehrschichtigen Verbundsystems, das für Trockenbau geeignet ist, wobei das Kit umfasst:

(1) eine Baustoffplatte, vorzugsweise Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Thermovlies, Innendämmplatte, Klimaplatte oder Acrylglas,
(2) eine Heizfarbe, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, wobei mehr bevorzugt die Heizfarbe mindestens zwei Leitfähigkeitsadditive, ausgewählt aus Leitfähigkeitsadditiven, die Graphit, Graphen und Ruß umfassen, umfasst und die Heizfarbe frei von elektrisch leitfähigen Carbonfasern und Kohlenstoff-Nanotubes ist, und
(3) mindestens zwei elektrisch leitfähige Kontaktelemente.

31. Kit gemäß Punkt 30, ferner umfassend:

(4) ein Steuerungselement, das eine Spannungsquelle, vorzugsweise eine Spannungsquelle für Schutzkleinspannung, und eine Steuerungsvorrichtung zum Steuern einer beheizbaren Schicht umfasst; und
(5) zwei elektrische Leitungen, wobei die erste elektrische Leitung mit einem der Pole der Spannungsquelle verbindbar oder verbunden ist und die zweite elektrische Leitung mit dem anderen Pol der Spannungsquelle verbindbar oder verbunden ist und die erste elektrische Leitung mit einem der mindestens zwei elektrisch leitfähigen Kontaktelementen elektrisch leitend verbindbar ist und die zweite elektrische Leitung mit einem der anderen der mindestens zwei elektrisch leitfähigen Kontaktelementen elektrisch leitend verbindbar ist.

32. Kit gemäß Punkt 31, wobei dass das Steuerungselement eine Abschaltautomatik der Spannungsquelle aufweist, wobei vorzugsweise bei (I) Entstehung von Funken auf der beheizbaren Schicht oder (II) einer Abweichung von mindestens 1 % des durch die beheizbare Schicht fließenden Stroms vom Normalwert die Abschaltautomatik aktiviert, d.h. die Spannungsquelle abgeschaltet wird.

33. Kit gemäß einem der Punkte 31 und 32, wobei das Steuerungselement ferner einen Thermostat aufweist und/oder wobei die Steuerungsvorrichtung derart ausgelegt und konfiguriert ist, dass jeder der mehreren, voneinander räumlich getrennten Bereiche der beheizbaren Schicht mit einer unterschiedlichen Spannung (und/oder elektrischem Strom) beaufschlagbar ist.

34. Verwendung des mehrschichtigen Verbundsystems gemäß einem der Punkte 1 bis 19 oder des Trockenbauelementes gemäß einem der Punkte 22 bis 25 oder eines mittels des Kits gemäß einem der Punkte 27 bis 29 hergestellten Trockenbauelements oder eines mittels des Kits gemäß einem der Punkte 30 bis 33 hergestellten Verbundsystems zum Beheizen eines Raumes oder zum Abschirmen eines Raumes vor elektromagnetischer Strahlung.

35. Verfahren zum Beheizen eines Raumes, umfassend die Schritte:

(i) Anbringen eines oder mehrerer mehrschichtiger Verbundsysteme gemäß einem der Punkte 1 bis 19 an eine oder mehrere Wände und/oder Decken, und
(ii) Beaufschlagen der beheizbaren Schicht des/der mehrschichtigen Verbundsystems/Verbundsysteme mit elektrischer Spannung und/oder elektrischem Strom.

**Patentansprüche**

1. Mehrschichtiges Verbundsystem, aufweisend eine Baustoffplatte und eine beheizbare Schicht, wobei die Vorderseite der Baustoffplatte der beheizbaren Schicht zugewandt ist und die beheizbare Schicht aus mehreren, voneinander räumlich getrennten Bereichen besteht.

2. Mehrschichtiges Verbundsystem gemäß Anspruch 1, wobei die beheizbare Schicht des Verbundsystems aus mindestens 4, vorzugsweise 4 bis 12, mehr bevorzugt 6 bis 10, voneinander räumlich getrennten Bereichen besteht.

3. Mehrschichtiges Verbundsystem gemäß einem der vorangegangen Ansprüche, wobei das Verbundsystem für Trockenbau geeignet ist, insbesondere für eine nachträgliche Wandmontage geeignet ist.

4. Mehrschichtiges Verbundsystem gemäß einem der vorangegangen Ansprüche, wobei die Flächen der einzelnen, voneinander räumlich getrennten Bereiche der beheizbaren Schicht folgende Bedingung erfüllen:

$$F(A)/F(B) \leq 1,30,$$

vorzugsweise

$$F(A)/F(B) \leq 1,10,$$

mehr bevorzugt

$$F(A)/F(B) \leq 1,05,$$

wobei

F(A) die Fläche des größten der voneinander räumlich getrennten Bereiche der beheizbaren Schicht innerhalb des Verbundsystems ist, und F(B) die Fläche des kleinsten der voneinander räumlich getrennten Bereiche der beheizbaren Schicht innerhalb des Verbundsystems ist.

5. Mehrschichtiges Verbundsystem gemäß einem der vorangegangen Ansprüche, wobei das Verbundsystem ferner mindestens zwei elektrisch leitfähige Kontaktelemente aufweist, die an den voneinander räumlich getrennten Bereichen der beheizbaren Schicht derart angeordnet sind, dass alle der voneinander räumlich getrennten Bereiche der beheizbaren Schicht, vorzugsweise individuell, mit elektrischer Spannung und/oder elektrischem Strom beaufschlagbar sind.

6. Mehrschichtiges Verbundsystem gemäß einem der vorangegangen Ansprüche, wobei das mehrschichtige Verbundsystem senkrecht auf die Vorderseite gesehen in mindestens 2 Teile, vorzugsweise mindestens 3 Teile, mehr bevorzugt in mindestens 4 Teile, trennbar ist, ohne dabei einen der voneinander räumlich getrennten Bereiche der beheizbaren Schicht zu durchtrennen und jeder der Teile des mehrschichtigen Verbundsystems nach der Trennung mindestens einen der voneinander räumlich getrennten Bereiche der beheizbaren Schicht aufweist, und die Kontaktelemente und Anschlusselemente, falls jeweils vorhanden, derart angeordnet sind, dass, nach der Trennung der mindestens 2 Teile, jeder der voneinander räumlich getrennten Bereiche der beheizbaren Schicht auf jedem der mindestens 2 Teile mit elektrischer Spannung und/oder elektrischem Strom beaufschlagbar ist.

7. Verfahren zur Herstellung eines mehrschichtigen Verbundsystems gemäß einem der Ansprüche 1 bis 6, umfassend die Schritte

a) Bereitstellen einer Baustoffplatte wie in den Ansprüchen 1 bis 6 definiert, und
b) Auftragen einer Heizfarbe, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, auf die Vorderseite der Baustoffplatte.

8. Trockenbauelement, aufweisend ein mehrschichtiges Verbundsystem gemäß einem der Ansprüche 1 bis 6.

9. Trockenbauelement gemäß Anspruch 8, wobei

    a) das mehrschichtige Verbundsystem mindestens zwei elektrisch leitfähige Kontaktelemente wie in Anspruch 5 definiert umfasst,
    b) das Trockenbauelement ein Steuerungselement, das eine Spannungsquelle, vorzugsweise eine Spannungsquelle für Schutzkleinspannung, und eine Steuerungsvorrichtung zum Steuern der beheizbaren Schicht umfasst, und
    c) das Trockenbauelement zwei elektrische Leitungen umfasst, wobei die erste elektrische Leitung mit einem der Pole der Spannungsquelle verbunden ist und die zweite elektrische Leitung mit dem anderen Pol der Spannungsquelle verbunden ist,

    wobei die erste elektrische Leitung mit einem der mindestens zwei elektrisch leitfähigen Kontaktelementen elektrisch leitend verbunden ist und die zweite elektrische Leitung mit einem anderen der mindestens zwei elektrisch leitfähigen Kontaktelementen elektrisch leitend verbunden ist, vorausgesetzt, dass diese zwei elektrisch leitfähigen Kontaktelemente mit demselben oder denselben voneinander räumlich getrennten Bereich(en) der beheizbaren Schicht in elektrisch leitendem Kontakt stehen, wobei vorzugsweise die elektrisch leitende Verbindung zwischen der ersten elektrischen Leitung und der zweiten elektrischen Leitung und dem jeweiligen elektrisch leitfähigen Kontaktelement mittels eines Anschlusselements erfolgt.

10. Wand und/oder Decke, enthaltend ein mehrschichtiges Verbundsystem gemäß einem der Ansprüche 1 bis 6 oder ein Trockenbauelement gemäß einem der Ansprüche 8 oder 9.

11. Kit zum Herstellen eines Trockenbauelementes, wobei das Kit umfasst:

    (1) mindestens ein mehrschichtiges Verbundsystem gemäß einem der Ansprüche 1 bis 6,
    (2) ein Steuerungselement, das eine Spannungsquelle, vorzugsweise eine Spannungsquelle für Schutzkleinspannung, und eine Steuerungsvorrichtung zum Steuern der beheizbaren Schicht umfasst,
    (3) zwei elektrische Leitungen, wobei die erste elektrische Leitung mit einem der Pole der Spannungsquelle verbindbar oder verbunden ist und die zweite elektrische Leitung mit dem anderen Pol der Spannungsquelle verbindbar oder verbunden ist und die erste elektrische Leitung mit einem der mindestens zwei elektrisch leitfähigen Kontaktelementen elektrisch leitend verbindbar ist und die zweite elektrische Leitung mit einem der anderen der mindestens zwei elektrisch leitfähigen Kontaktelementen elektrisch leitend verbindbar ist.

12. Kit zur Herstellung eines mehrschichtigen Verbundsystems, das für Trockenbau geeignet ist, wobei das Kit umfasst:

    (1) eine Baustoffplatte, vorzugsweise Gipsplatte, z.B. Gipskartonplatte, Gipsfaserplatte, Spanplatte, Holzplatte, MDF-Platte, OSB-Platte, Hart-PVC-Platte, Bauplatte, z.B. Fliesenlegerplatte, Fliesenverlegeplatte, Thermoplatte, Thermopanel, Thermovlies, Innendämmplatte, Klimaplatte oder Acrylglas,
    (2) eine Heizfarbe, die vorzugsweise mindestens ein Leitfähigkeitsadditiv, ausgewählt aus Leitfähigkeitsadditiven, die Graphit, Graphen und Ruß umfassen, und mindestens ein Bindemittel umfasst, wobei das Bindemittel ein elektrisch nicht leitfähiges Polymer oder ein anorganisches Bindemittel umfasst, wobei mehr bevorzugt die Heizfarbe mindestens zwei Leitfähigkeitsadditive, ausgewählt aus Leitfähigkeitsadditiven, die Graphit, Graphen und Ruß umfassen, umfasst und die Heizfarbe frei von elektrisch leitfähigen Carbonfasern und Kohlenstoff-Nanotubes ist, und
    (3) mindestens zwei elektrisch leitfähige Kontaktelemente,
    das Kit optional ferner umfassend
    (4) ein Steuerungselement, das eine Spannungsquelle, vorzugsweise eine Spannungsquelle für Schutzkleinspannung, und eine Steuerungsvorrichtung zum Steuern einer beheizbaren Schicht umfasst; und
    (5) zwei elektrische Leitungen, wobei die erste elektrische Leitung mit einem der Pole der Spannungsquelle verbindbar oder verbunden ist und die zweite elektrische Leitung mit dem anderen Pol der Spannungsquelle verbindbar oder verbunden ist und die erste elektrische Leitung mit einem der mindestens zwei elektrisch leitfähigen Kontaktelementen elektrisch leitend verbindbar ist und die zweite elektrische Leitung mit einem der anderen der mindestens zwei elektrisch leitfähigen Kontaktelementen elektrisch leitend verbindbar ist.

13. Trockenbauelement gemäß Anspruch 9 oder Kit gemäß Anspruch 11 oder 12, wobei dass das Steuerungselement eine Abschaltautomatik der Spannungsquelle aufweist, wobei vorzugsweise bei (I) Entstehung von Funken auf der beheizbaren Schicht oder (II) einer Abweichung von mindestens 1% des durch die beheizbare Schicht fließenden Stroms vom Normalwert die Abschaltautomatik aktiviert, d.h. die Spannungsquelle abgeschaltet wird und/oder

wobei das Steuerungselement ferner einen Thermostat aufweist und/oder

wobei die Steuerungsvorrichtung derart ausgelegt und konfiguriert ist, dass jeder der mehreren, voneinander räumlich getrennten Bereiche der beheizbaren Schicht mit einer unterschiedlichen Spannung (und/oder elektrischem Strom) beaufschlagbar ist.

14. Verwendung des mehrschichtigen Verbundsystems gemäß einem der Ansprüche 1 bis 6 oder des Trockenbauelementes gemäß einem der Ansprüche 8, 9 oder 13 oder eines mittels des Kits gemäß einem der Ansprüche 11 oder 13 hergestellten Trockenbauelements oder eines mittels des Kits gemäß einem der Ansprüche 12 oder 13 hergestellten Verbundsystems zum Beheizen eines Raumes oder zum Abschirmen eines Raumes vor elektromagnetischer Strahlung.

15. Verfahren zum Beheizen eines Raumes, umfassend die Schritte:

    (i) Anbringen eines oder mehrerer mehrschichtiger Verbundsysteme gemäß einem der Ansprüche 1 bis 6 an eine oder mehrere Wände und/oder Decken, und

    (ii) Beaufschlagen der beheizbaren Schicht des/der mehrschichtigen Verbundsystems/Verbundsysteme mit elektrischer Spannung und/oder elektrischem Strom.

**Figur 1**

Europäisches
Patentamt

European
Patent Office

Office européen
des brevets

**EUROPÄISCHER RECHERCHENBERICHT**

Nummer der Anmeldung

EP 18 16 8472

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/245326 A1 (RIVAT ALAIN [FR] ET AL) 24. August 2017 (2017-08-24) * Absätze [0001], [0002], [0012], [0013], [0029], [0030], [0034], [0040], [0054] * * Absätze [0076] - [0081], [0097] - [0099], [0102] - [0111], [0116]; Abbildungen 1, 6, 8 * | 1-15 | INV. F24D13/02 F24D19/10 H05B3/14 H05B3/26 C09D5/24 H01B1/24 |
|  | ----- |  |  |
| X | EP 2 618 630 A2 (FUTURECARBON GMBH [DE]) 24. Juli 2013 (2013-07-24) * Absätze [0013] - [0018], [0021], [0024], [0025], [0027], [0028], [0030] - [0035], [0038] * * Absätze [0042], [0047]; Abbildungen 3, 4 * | 1-15 |  |
|  | ----- |  |  |
| X | EP 3 182 794 A1 (E G O ELEKTRO-GERÄTEBAU GMBH [DE]) 21. Juni 2017 (2017-06-21) * Absätze [0003], [0024] - [0026], [0032] - [0038]; Abbildungen 1, 2 * | 1-6 |  |
|  | ----- |  | RECHERCHIERTE SACHGEBIETE (IPC) |
| A | DE 198 36 148 A1 (ELSAESSER MANFRED [AT]) 2. März 2000 (2000-03-02) * das ganze Dokument * | 1-15 | F24D H05B C09D H01B |
|  | ----- |  |  |
| A | DE 20 2014 009744 U1 (PLASCH MICHAEL [AT]; WOLF INGO [DE]) 24. März 2015 (2015-03-24) * das ganze Dokument * | 1-15 |  |
|  | ----- |  |  |
| A | DE 20 2016 107401 U1 (FURTMAYR CHRISTIAN [DE]; FUTURE CARBON GMBH [DE]) 1. Februar 2017 (2017-02-01) * das ganze Dokument * | 1-15 |  |
|  | ----- |  |  |
| A | DE 20 2016 106096 U1 (FUTURE CARBON GMBH [DE]) 15. November 2016 (2016-11-15) * das ganze Dokument * | 1-15 |  |
|  | ----- |  |  |

Der vorliegende Recherchenbericht wurde für alle Patentansprüche erstellt

| Recherchenort | Abschlußdatum der Recherche | Prüfer |
|---|---|---|
| München | 20. September 2018 | Schwaiger, Bernd |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes
     Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 16 8472

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2018

| Im Recherchenbericht angeführtes Patentdokument | Datum der Veröffentlichung | Mitglied(er) der Patentfamilie | Datum der Veröffentlichung |
|---|---|---|---|
| US 2017245326 A1 | 24-08-2017 | EP 3209092 A1<br>FR 3048151 A1<br>US 2017245326 A1 | 23-08-2017<br>25-08-2017<br>24-08-2017 |
| EP 2618630 A2 | 24-07-2013 | DE 102012001027 A1<br>EP 2618630 A2 | 25-07-2013<br>24-07-2013 |
| EP 3182794 A1 | 21-06-2017 | CN 107205288 A<br>CN 107426835 A<br>DE 102016209012 A1<br>EP 3182794 A1<br>EP 3250003 A1<br>JP 2017112114 A<br>JP 2017212206 A<br>KR 20170132695 A<br>US 2017181226 A1 | 26-09-2017<br>01-12-2017<br>22-06-2017<br>21-06-2017<br>29-11-2017<br>22-06-2017<br>30-11-2017<br>04-12-2017<br>22-06-2017 |
| DE 19836148 A1 | 02-03-2000 | AT 232676 T<br>AU 747734 B2<br>CA 2340164 A1<br>DE 19836148 A1<br>EA 200100232 A1<br>EP 1106033 A1<br>ES 2193740 T3<br>US 6426489 B1<br>WO 0010365 A1<br>ZA 200100940 B | 15-02-2003<br>23-05-2002<br>24-02-2000<br>02-03-2000<br>27-08-2001<br>13-06-2001<br>01-11-2003<br>30-07-2002<br>24-02-2000<br>04-02-2002 |
| DE 202014009744 U1 | 24-03-2015 | KEINE | |
| DE 202016107401 U1 | 01-02-2017 | KEINE | |
| DE 202016106096 U1 | 15-11-2016 | CN 206611599 U<br>DE 202016106096 U1 | 03-11-2017<br>15-11-2016 |

Für nähere Einzelheiten zu diesem Anhang : siehe Amtsblatt des Europäischen Patentamts, Nr.12/82

EPO FORM P0461